(19) Europäisches Patentamt / European Patent Office / Office européen des brevets

(11) **EP 4 299 233 A1**

(12) **EUROPEAN PATENT APPLICATION**
published in accordance with Art. 153(4) EPC

(43) Date of publication:
**03.01.2024 Bulletin 2024/01**

(21) Application number: **21927908.0**

(22) Date of filing: **26.02.2021**

(51) International Patent Classification (IPC):
**B23K 26/064** (2014.01)

(52) Cooperative Patent Classification (CPC):
**B23K 26/064**

(86) International application number:
**PCT/JP2021/007455**

(87) International publication number:
**WO 2022/180808 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NIKON CORPORATION**
**Minato-ku**
**Tokyo 108-6290 (JP)**

(72) Inventor: **SUDO, Kenta**
**Tokyo 108-6290 (JP)**

(74) Representative: **Hoffmann Eitle**
**Patent- und Rechtsanwälte PartmbB**
**Arabellastraße 30**
**81925 München (DE)**

(54) **OPTICAL PROCESSING DEVICE**

(57) An optical processing apparatus includes: a combining element that combines a first optical path of a first light beam having a first wavelength and a second optical path of a second light beam having a second wavelength longer than the first wavelength; a condensing optical system that has a positive refractive power and that condenses each of the first light beam and the second light beam from the combining element on a processing target object; and a correction optical system having a negative refractive power, the correction optical system is disposed on the first optical path at an entrance side of the combining element, one light beam of the first light beam and the second light beam is a light beam for processing the processing target object, the other light beam of the first light beam and the second light beam is a light beam for measuring the processing target object.

FIG. 1

## Description

Technical Field

The present invention relates to an optical processing apparatus.

Background Art

A Patent Literature 1 discloses, as a processing apparatus configured to process an object, a processing apparatus configured to irradiate a surface of an object with a laser beam to form a structure. This type of processing apparatus is required to properly process the object (the Patent Literature 1).

Citation List

Patent Literature

Patent Literature 1: US4,994,639B

Summary of Invention

According to a first aspect, an optical processing apparatus includes: a combining element that combines a first optical path of a first light beam having a first wavelength and a second optical path of a second light beam having a second wavelength that is longer than the first wavelength; a condensing optical system that has a positive refractive power and that condenses each of the first light beam and the second light beam from the combining element on a processing target object; and a correction optical system that has a negative refractive power, wherein the correction optical system is disposed on the first optical path at an entrance side of the combining element, the light beam of the first light beam and the second light beam is a light beam for processing the processing target object, the other light beam of the first light beam and the second light beam is a light beam for measuring the processing target object.

According to a second aspect, an optical processing apparatus includes: a combining element that combines a first optical path of a first light beam having a first wavelength and a second optical path of a second light beam having a second wavelength that is longer than the first wavelength; a condensing optical system that has a positive refractive power and that condenses each of the first light beam and the second light beam from the combining element on a processing target object; and a correction optical system that has a positive refractive power, wherein the correction optical system is disposed on the first optical path at an entrance side of the combining element, a back focus of the condensing optical system at the first wavelength is longer than a back focus of the condensing optical system at the second wavelength, one light beam of the first light beam and the second light beam is a light beam for processing the processing target object, the other light beam of the first light beam and the second light beam is a light beam for measuring the processing target object.

According to a third aspect, an optical processing apparatus including: a combining element that combines a first optical path of a first light beam having a first wavelength and a second optical path of a second light beam having a second wavelength that is longer than the first wavelength; a condensing optical system that has a positive refractive power and that condenses each of the first light beam and the second light beam from the combining element on a processing target object; and a correction optical system that has a positive refractive power, wherein the correction optical system is disposed on the second optical path at an entrance side of the combining element, one light beam of the first light beam and the second light beam is a light beam for processing the processing target object, the other light beam of the first light beam and the second light beam is a light beam for measuring the processing target object.

According to a fourth aspect, an optical processing apparatus includes: a combining element that combines a first optical path of a first light beam having a first wavelength and a second optical path of a second light beam having a second wavelength that is longer than the first wavelength; a condensing optical system that has a positive refractive power and that condenses each of the first light beam and the second light beam from the combining element on a processing target object; and a correction optical system that has a negative refractive power, wherein the correction optical system is disposed on the second optical path at an entrance side of the combining element, a back focus of the condensing optical system at the first wavelength is longer than a back focus of the condensing optical system at the second wavelength, one light beam of the first light beam and the second light beam is a light beam for processing the processing target object, the other light beam of the first light beam and the second light beam is a light beam for measuring the processing target object.

Brief Description of Drawings

[FIG. 1] A diagram schematically illustrating a configuration of an optical processing apparatus in a first example embodiment.
[FIG. 2] A diagram illustrating a state in which a first light beam and a second light beam are condensed on a condensed position.
[FIG. 3] A diagram illustrating an example of an optical design of an optical apparatus in the first example embodiment.
[FIG. 4] A diagram schematically illustrating a configuration of a condensing optical system of an optical apparatus in a second example embodiment.
[FIG. 5] A diagram illustrating an example of an optical design of the optical apparatus in the second example embodiment.

[FIG. 6] A diagram schematically illustrating a configuration of an optical processing apparatus in a modified example.

Description of Example embodiments

(Optical Processing Apparatus in First Example Embodiment)

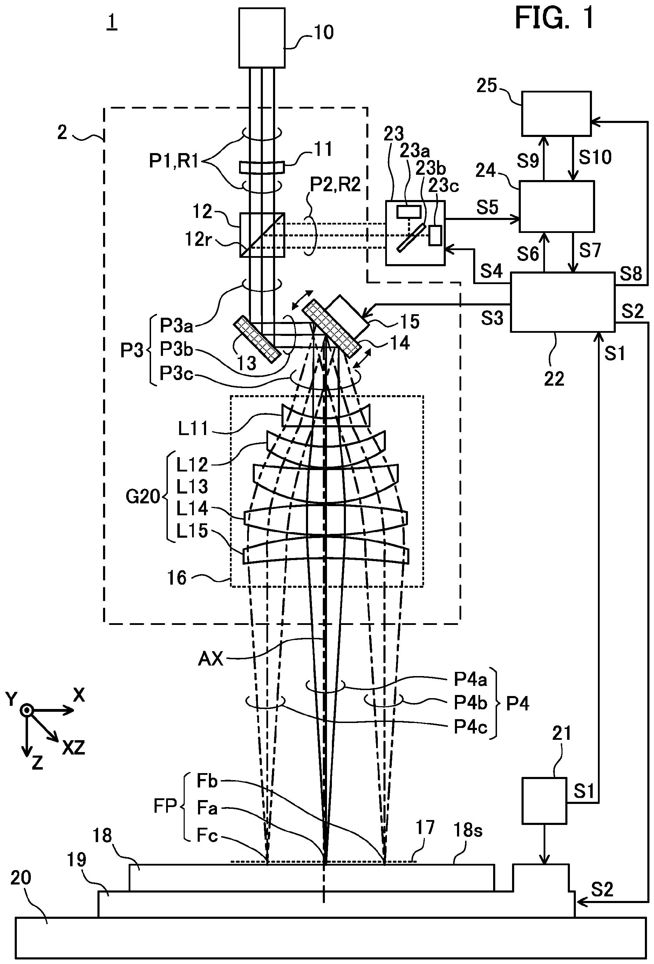

FIG. 1 is a diagram that schematically illustrates a configuration of an optical processing apparatus 1 in a first example embodiment. An X direction, a Y direction, and a Z direction indicated by arrows in FIG. 1 and below-described each drawing are perpendicular to one another, and each of the X direction, the Y direction, and the Z direction indicates the same direction in each drawing. Moreover, an XZ direction indicated by an arrow in FIG. 1 is an intermediate direction between the X direction and the Z direction described above, namely, indicates a direction that is perpendicular to the Y direction and that is away from each of the X direction and the Z direction by 45 degree. In the below-described description, the directions indicated by arrows are referred to as a +X direction, a +Y direction, a +Z direction and a +XZ direction, respectively. Moreover, a position in the X direction, a position in the Y direction, and a position in the Z direction are referred to as an X position, the Y position, and a Z position.

The optical processing apparatus 1 in the first example embodiment includes an optical apparatus 2 illustrated in a frame enclosed by a dashed line, a guide 20, a sample table 19, a control unit 22, a measurement unit 23, a calculation unit 24, and a position information modification unit 25. The optical processing apparatus 1 condenses a first light beam R1 having a first wavelength, which is emitted from a light source 10 and which enters the optical apparatus 2 through a first optical path P1, on an irradiation target plane 17 by the optical apparatus 2. A processing target object 18 is placed on the sample table 19, and the sample table 19 positions the processing target object 18 so that a processing target surface 18s of the processing target object 18 is coincident with the irradiation target plane 17 of the optical apparatus 2.

Moreover, the sample table 19 includes a driving member such as a linear motor and the like, and moves in at least one of the X direction and the Y direction on the guide 20. Note that the sample table 19 may move the processing target object 18 along the Z direction (an optical axis direction of a condensing optical system 16). Moreover, the optical apparatus 2 may be movable along the Z direction. Note that a focus adjustment optical system (not illustrated) may be arranged to change a condensed position of each of the first light beam R1 and a below-described second light beam R2 on the processing target object 18 along the Z direction.

In this case, the focus adjustment system tem may be disposed on a below-described front-side third optical path P3a between a combining element 12 and a fixed mirror 13 (a polarization scanning unit) (in other words, an optical path in which the first optical path P1 and a second optical path P2 are overlapped with each other). Note that the focus adjustment optical system may be disposed on at least one optical path of the first optical path P1 between the light source 10 and the combining element 12 (described below) and the second optical path P2 between the measurement unit 23 and the combining element 12 (described below).

A X position, a Y position, and a Z position of the sample table 19 are measured by an optical encoder 21 as one example, and position information of the sample table 19 is outputted to the control unit 22 as a measurement signal S1. Based on the measurement signal S1, the control unit 22 outputs a control signal S2 to the sample table 19 to place the sample table 19 at a desired position.

The sample table 19 may be referred to as a holding unit that holds a sample.

Details of the measurement unit 23, the calculation unit 24, and the position information modification unit 25 will be described below.

The optical apparatus 2 includes a correction optical system 11, the combining element 12, the fixed mirror 13, a swingable mirror 14, and the condensing optical system 16 that is illustrated in a frame enclosed by a dotted lines, in this order from a side of the light source 10 from which the first light beam R1 having the first wavelength is supplied.

The first light beam R1, which is supplied as a collimated light beam as one example from the light source 10 and propagates in the +Z direction, enters the correction optical system 11 that includes one or more lenses or mirrors and that has a predetermined refractive power (power). The first light beam R1 emitted from the correction optical system 11 enters the combining element 12. Here, the refractive power of an optical system or an optical element may be an inverse number of a focal length of the optical system or the optical element.

In this specification, an optical path of the first light beam R1 between the light source 10 and the combining element 12 is referred to as the first optical path P1. Therefore, it can be said that the correction optical system 11 is disposed on the first optical path P1. Note that the first optical path P1 is not limited to a path between the light source 10 and the combining element 12. For example, the first optical path P1 of the first light beam R1 may be an optical path of the first light beam R1 that propagates from the light source 10 to the processing target object 18 through the combining element 12, the fixed mirror 13, the swingable mirror 14, and the condensing optical system 16 in the optical processing apparatus 1 (the optical apparatus 2). Namely, it can be said that the correction optical system 11 is disposed on the first optical path P1 1at an entrance side of the first light beam R1 of the combining element 12.

In this specification, an optical path of the second light beam R2 between the measurement unit 23 and the combining element 12 is referred to as the second optical path P2. Therefore, it can be said that the correction optical system 11 is not disposed on the second optical path P2. The measurement unit 23 includes: a measurement light source 23a that emits the second light beam R2; an optical receiving unit 23c that optically receives detection light (the second light beam R2) returned from the processing target object 18 as described below; and a beam splitter 23b that separates and combines the light emitted from the measurement light source 23a and the light returned from the processing target object 18. Note that The beam splitter 23b may be a half mirror.

Note that the second optical path P2 is not limited to an optical path between the measurement unit 23 and the combining element 12. For example, the second optical path P2 of the second light beam R2 may be an optical path of the second light beam R2 that propagates from the measurement light source 23a (the measurement unit 23) to the processing target object 18 through the combining element 12, the fixed mirror 13, the swingable mirror 14, and the condensing optical system 16 in the optical processing apparatus 1 (the optical apparatus 2).

The second light beam R2 propagating from the measurement light source 23a (the measurement unit 23) to the combining element 12 through the second optical path P2 also enters the combining element 12. Here, the second light beam R2 is a light beam having a second wavelength that is different from the first wavelength of the first light beam R1. More specifically, the second wavelength of the second light beam R2 is longer than the first wavelength of the first light beam R1. In the combining element 12, the first optical path P1 is combined with the second optical path P2 from the measurement light source 23a (the measurement unit 23). Therefore, the first light beam R1 and the second light beam R2 are combined by the combining element 12. The combining element 12 is a dichroic prism as an example, and a dichroic reflective surface 12r allows the first light beam R1 having the first wavelength to pass therethrough and reflects the second light beam R2 having the second wavelength that is different from the first wavelength.

The combining element 12 is not limited to the dichroic prism described above, but may include a flat plate glass including a dichroic mirror. Alternatively, in a case where the first light beam R1 and the second light beam R2 are linearly polarized lights whose polarization planes are generally orthogonal to each other, a polarization beam splitter may be used.

The first light beam R1 and the second light beam R2 combined by the combining element 12 are both emitted from the combining element 12 toward the +Z direction and enters the fixed mirror 13. The fixed mirror 13 is a planar mirror disposed along a plane parallel to the XZ direction and the Y direction as one example. The first light beam R1 and the second light beam R2 that propagates toward the +Z direction to enter the fixed mirror 13 are reflected toward the +X direction by the fixed mirror 13 and enter the swingable mirror 14 that is a planar mirror. The first light beam R1 and the second light beam R2 reflected toward the +Z direction generally by the swingable mirror 14 enter the condensing optical system 16.

In this specification, an optical path between the combining element 12 and the condensing optical system 16 is referred to as a third optical path P3. Therefore, it can be said that the fixed mirror 13 and the swingable mirror 14 are disposed on the third optical path P3. Moreover, an optical path of the third optical path P3 between the combining element 12 and the fixed mirror 13 may be referred to as the front-side third optical path P3a, an optical path of the third optical path P3 between the fixed mirror 13 and the swingable mirror 14 is referred to as a middle-side third optical path P3b, and an optical path of the third optical path P3 between the swingable mirror 14 and the condensing optical system 16 is referred to as a back-side third optical path P3c. Incidentally, as described above, the first optical path P1 of the first light beam R1 may be the optical path of the first light beam R1 that propagates from the light source 10 to the processing target object 18 through the combining element 12, the fixed mirror 13, the swingable mirror 14, and the condensing optical system 16 in the optical processing apparatus 1.

Moreover, the second optical path P2 of the second light beam R2 may be the optical path of the second light beam R2 that propagates from the measurement light source 23a (the measurement unit 23) to the processing target object 18 through the combining element 12, the fixed mirror 13, the swingable mirror 14, and the condensing optical system 16 in the optical processing apparatus 1. Therefore, it can be said that the third optical path P3 is an optical path in which at least a part of the first optical path P1 of the first light beam R1 and the second optical path P2 of the second light beam R2 are overlapped with each other. Namely, it can be said that the fixed mirror 13 and the swingable mirror 14 (namely, a deflection scanning unit) are disposed on the first optical path P1 and the second optical path P2 between the combining element 12 and the condensing optical system 16.

The condensing optical system 16 is an optical system including a plurality of lenses (L11 to L15). An optical axis AX of the condensing optical system 16 is illustrated as a chain line in FIG. 1. Note that the optical axis AX of the condensing optical system 16 may be referred to as an optical axis of the processing apparatus 2 at an emitting side. The lens L11, which is disposed at the most entrance side, is a lens having a negative refractive power as one example. In the below-described description, the lens L11 may be referred to as a first lens. And the lenses (L12 to L15) disposed at a positions that are closer to the irradiation target plane 17 side (a downstream side) than the lens L11 is constitute the second lens group G20 and have a positive refractive power as a whole. The first light beam R1 and the second light beam R2 are generally condensed on the irradiation target plane 17 by the refractive power of the condensing optical system 16. Incidentally, although the first light beam R1 and the second light beam R2 are condensed on the irradiation target plane 17 for convenience of description, the condensed position of the first light beam R1 and the condensed position of the second light beam R2 may not be located on the same plane (namely, on the irradiation target plane 17).

The swingable mirror 14 is held by a driving member 15 to be swingable within a range of a predetermined angle around a rotational axis parallel to the Y direction, as one example. As the swingable mirror 14 and the driving member 15, a so-called Galvano mirror may be used as one example. In a case where the swingable mirror 14 swings within the range of a predetermined angle around the rotational axis along the Y direction, propagating directions of the first light beam R1 and the second light beam R2 reflected by the swingable mirror 14 changes (swings) between two directions that are away from the +Z direction by twice of the above-described predetermined angle toward the ±X directions, respectively.

In a case where a reflective surface of the swingable mirror 14 is located at a reference position, namely, in a case where its reflective surface is parallel to the Y direction and the XZ direction, the first light beam R1 and the second light beam R2 reflected by the swingable mirror 14 pass through a central optical path P4a to be generally condensed at a central condensed point Fa on the irradiation target plane 17.

In a case where the swingable mirror 14 rotates leftward from the reference position around the rotational axis parallel to the Y direction, the first light beam R1 and the second light beam R2 reflected by the swingable mirror 14 pass through a right-side optical path P4b to be generally condensed on a right-side condensed point Fb, which is located at a position away from the central condensed point Fa toward the +X side, on the irradiation target plane 17.

On the other hand, in a case where the swingable mirror 14 rotates rightward from the reference position around the rotational axis parallel to the Y direction, the first light beam R1 and the second light beam R2 reflected by the swingable mirror 14 pass through a left-side optical path P4c to be generally condensed on a left-side condensed point Fc, which is located at a position away from the central condensed point Fa toward the -X side, on the irradiation target plane 17.

Therefore, it can be said that the swingable mirror 14 is a deflection scanning unit that deflects the first light beam R1 and the second light beam R2 to scan the irradiation target plane 17 with them.

Note that the deflection scanning unit is not limited to the Galvano mirror. For example, the deflection scanning unit may be an existing member configured to deflect each of the first light beam R1 and the second light beam R2 from the combining element 12 to move the condensed point of each of the first light beam R1 and the second light beam R2 relative to the processing target object 18 through the condensing optical system 16. For example, the deflection scanning unit may be a polygon mirror.

The control unit 22 outputs a control signal S3 to the driving member 15 to set an orientation of the swingable mirror 14 to be a predetermined orientation.

In the below-described description, the central optical path P4a, the right-side optical path P4b, and the left-side optical path P4c are referred to as a fourth optical path P4 collectively or individually. Moreover, the central condensed point Fa, the right-side condensed point Fb, and the left-side condensed point Fc are referred to as a condensed point FP collectively or individually.

The condensing optical system 16 is a so-called fθ lens system, as one example. In a case where a projection characteristic of the condensing optical system 16 is fθ, a distance between the central condensed point Fa and the right-side condensed point Fb or the left-side condensed point Fc on the irradiation target plane 17 is proportional to a deviation angle of the propagating direction of the first light beam R1 and the second light beam R2, which are emitted from the swingable mirror 14, from the +Z direction. In other words, the X position of the condensed point FP on the irradiation target plane 17 is proportional to a rotational angle θ of the swingable mirror 14 from the above-described reference position around the Y direction.

Note that the projection characteristic of the condensing optical system 16 is not limited to fθ. For example, the projection characteristic of the condensing optical system 16 may be an Equisolid angle projection characteristic or an orthogonal projection characteristic.

The processing target surface 18s of the processing target object 18 placed on the irradiation target plane 17 is irradiated with the first light beam R1 supplied from the light source 10 through the first optical path P1, the third optical path P3, and the fourth optical path P4 described above. The processing target surface 18s of the processing target object 18 placed on the irradiation target plane 17 is irradiated with the second light beam R2 emitted from the measurement light source 23a (the measurement unit 23) through the second optical path P2, the third optical path P3, and the fourth optical path P4 described above. incidentally, it can be said that the fourth optical path P4 is also an optical path in which at least a part of the first optical path P1 of the first light beam R1 and the second optical path P2 of the second light beam R2 are overlapped with each other, as with the third optical path P3.

In the optical processing apparatus 1 in the first example embodiment, the first light beam R1 is a light beam for processing the processing target surface 18s. Namely, the first light beam R1 processes a part of the processing target surface 18s that is irradiated with the first light beam R1 by vaporizing or melting the processing target surface 18s itself (so-called a removal processing), adding an object to the processing target surface 18s (so-called an additive processing), changing a characteristic of the processing target surface 18s, or exposing, vaporizing, or causing a chemical reaction of a film material formed on the processing target surface 18s. Note that the first light beam R1 may not be a light beam for processing the processing target surface 18s. For example, the first light beam R1 may be a light beam for measuring the processing target surface 18s.

In the optical processing apparatus 1 of the first example embodiment, the second light beam R2 of the second wavelength is a light beam for measuring a position of the processing target surface 18s, as one example. The second light beam R2 is emitted toward a part of the processing target surface 18s, and the second light beam R2 reflected or scattered by the processing target surface 18s returns to the combining element 12 through the fourth optical path P4 and the third optical path P3. Then, the second light beam R2 is reflected by the dichroic reflective surface 12r of the combining element 12, passes through the second optical path P2, and is optically received by the measurement unit 23 (the optical receiving unit 23c). The second light beam R2 that is reflected or scattered by the processing target surface 18s and received by the measurement unit 23 (the optical receiving unit 23c) may be referred to as the detection light. Note that the second light beam R2 may not be the light beam for measuring the processing target surface 18s. The second light beam R2 may be a light beam for processing the processing target surface 18s, for example. Incidentally, in a case where the first light beam R1 is the light beam for measuring the processing target surface 18s, the second light beam R2 may be the light beam for processing the processing target surface 18s. Incidentally, in a case where the first light beam R1 is the light beam for processing the processing target surface 18s, the second light beam R2 may also be the light beam for processing the processing target surface 18s. incidentally, in a case where the first light beam R1 is the light beam for measuring the processing target surface 18s, the second light beam R2 may also be the light beam for measuring the processing target surface 18s.

Incidentally, in the present example embodiment, the second wavelength is longer than the first wavelength, however, the second wavelength may be shorter than the first wavelength.

Information related to an intensity of the detection light detected by the measurement unit 23 (the optical receiving unit 23c) is outputted to the calculation unit 24. The calculation unit 24 calculates position information related to a part of the processing target surface 18s that is irradiated with the second light beam R2, based on the information related to the intensity of the detection light detected by the measurement unit 23. The position information calculated by the calculation unit 24 is one or more of information related to the X position, information related to the Y position, or information related to the Z position of the processing target surface 18s.

The measurement unit 23 may include an interferometer, for example. A three-dimensional shape measurement apparatus disclosed in Japanese Patent No. 5231883 may be used as a position measurement unit.

Note that the calculation unit 24 may also calculate position information related to the processing target surface 18s based on a signal S6 including the position information of the sample table 19 or information related to the rotational angle of the swingable mirror 14, which are transmitted from the control unit 22.

Incidentally, the position information of the processing target object 18s calculated by the calculation unit 24 may be coordinates of the processing target object 18s, a point cloud including a plurality of points included in the processing target object 18s, or a three-dimensional model representing the processing target object 18s.

The measurement unit 23 may detect at least one of a shape of the processing target surface 18s, a surface roughness of the processing target surface 18s, a temperature of the processing target surface 18s, a reflectance of the processing target surface 18s, and a transmittance of the processing target surface 18s, instead of or in addition to the information related to the position of the processing target surface 18s.

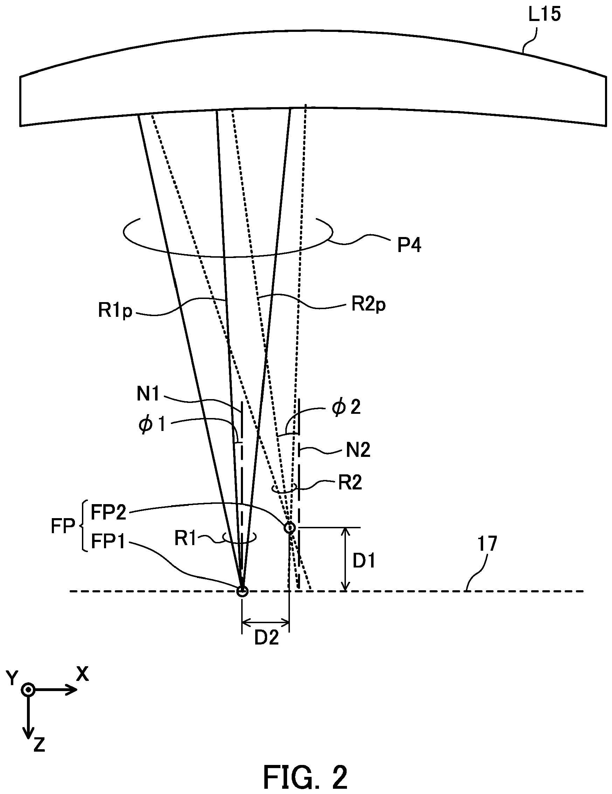

FIG. 2 is a conceptual diagram illustrating the fourth optical path P4 that is condensed onto the irradiation target plane 17 by the condensing optical system 16. Note that FIG. 2 illustrates only one lens L15 of the condensing optical system 16 that is closest to the irradiation target plane 17 for the simple illustration.

Chromatic aberration remains in the condensing optical system 16, although it is slight. Thus, the condensed point FP of the light with which the irradiation target plane 17 is irradiated through the fourth optical path P4 is separated into a first condensed point FP1 of the first light beam R1 having the first wavelength and a second condensed point FP2 of the second light beam R2 having the second wavelength different from the first wavelength.

In the below-described description, a difference of the Z position between the first condensed point FP1 and the second condensed point FP2 is referred to as an axial chromatic aberration D1, and a difference of a position in the XY plane direction is referred to as a lateral chromatic aberration D2.

Incidentally, in FIG. 2, a surface on which the first condensed point FP1 is formed is illustrated as the irradiation target plane 17, as one example. Incidentally, a surface on which the first condensed point FP1 is formed may be referred to as an image plane of the condensing optical system 16.

The optical processing apparatus 1 determines at least one of an irradiation position, an irradiation frequency, and an irradiation condition of the first light beam R1 for the processing target surface 18s based on the position information of the processing target surface 18s, which is detected and calculated by the measurement unit 23 and the calculation unit 24 using the second light beam R2, and so on. Incidentally, the irradiation frequency of the first light beam R1 is the number of times of the irradiation with the first light beam R1 per unit time or the number of times of the irradiation with the first light beam R1 relative to a predetermined position on the processing target surface 18s. Note that the irradiation condition of the first light beam R1 may include the intensity of the first light beam R1, the wavelength of the first light beam R1 and so on, for example.

However, the position information of the processing target surface 18s detected and calculated by the measurement unit 23 and the calculation unit 24 is the position information measured using the second light beam R2 having the second wavelength. Therefore, this position information includes an error caused by the axial chromatic aberration D1 and the lateral chromatic aberration D2 described above, compared to the position of the processing target surface 18s based on the first light beam R1 having the first wavelength used for the optical processing.

In the optical processing apparatus 1 of the first example embodiment, the correction optical system 11 disposed on the first optical path P1 of the optical apparatus 2 makes the condensed position of the first light beam R1 (the position of the first condensed point FP1) in the vicinity of the irradiation target plane 17 be closer to the condensed position of the second light beam R2 (the position of the second condensed point FP2). Therefore, a magnitude of the above-described axial chromatic aberration D1 is reduced, compared to a case in which the correction optical system 11 is not provided.

Here, in a case where the focal length of the condensing optical system 16 is positive (a refractive power is positive) and the axial chromatic aberration of the condensing optical system 16 is under-corrected (namely, in a case where a back focus of the condensing optical system 16 at the first wavelength is shorter than a back focus of the condensing optical system 16 at the second wavelength), it is possible to allow an absolute value of a difference between a back focus of a combined optical system of the condensing optical system 16 and the correction optical system 11 at the first wavelength and the back focus of the condensing optical system 16 at the second wavelength to be smaller than an absolute value of a difference between the back focus of the condensing optical system 16 at the first wavelength and the back focus of the condensing optical system 16 at the second wavelength, by setting the focal length of the correction optical system 11, which is disposed on the first optical path P1 in the optical apparatus 2, to be negative (the refractive power to be negative).

On the other hand, in a case where the focal length of the condensing optical system 16 is positive (the refractive power is positive) and the axial chromatic aberration of the condensing optical system 16 is over-

corrected (namely, in a case where the back focus of the condensing optical system 16 at the first wavelength is longer than the back focus of the condensing optical system 16 at the second wavelength), it is possible to allow the absolute value of the difference between the back focus of the combined optical system of the condensing optical system 16 and the correction optical system 11 at the first wavelength and the back focus of the condensing optical system 16 at the second wavelength to be smaller than the absolute value of the difference between the back focus of the condensing optical system 16 at the first wavelength and the back focus of the condensing optical system 16 at the second wavelength, by setting the focal length of the correction optical system 11, which is disposed on the first optical path P1 in the optical apparatus 2, to be positive (the refractive power to be positive) (the optical apparatus in a case where the refractive power of the condensing optical system 16 is positive and the axial chromatic aberration of the condensing optical system 16 is overcorrected will be described in detail in a second example embodiment).

Note that the back focus of the optical system may be a distance along an optical axis of the optical system from an optical surface of an optical member of the optical system on the most emission side to a rear focal position of the optical system.

Therefore, the error caused by the axial chromatic aberration D1 in the position information of the processing target surface 18s detected and calculated by the measurement unit 23 and the calculation unit 24 is reduced, and the position information of the processing target surface 18s can be calculated more accurately.

Incidentally, in general, an angle φ1 of a principal ray R1p of the first light beam R1 relative to a normal line N1 of the irradiation target plane 17 and an angle φ2 of a principal ray R2p of the second light beam R2 relative to a normal line N2 of the irradiation target plane 17 may be different from each other due to a residual chromatic aberration in the condensing optical system 16.

In the optical processing apparatus 1 in the first example embodiment, an absolute values of the angle φ1 and the angle φ2 are both set to be 1 degree or less by optimizing an optical design of the optical apparatus 2. Namely, even in a case where the swingable mirror 14 changes the position of the fourth optical path P4 changes among the central optical path P4a, the right-side optical path P4b, the left-side optical path P4c and so on illustrated in FIG. 1, the principal ray R1p and the principal ray R2p enter the irradiation target plane 17 at an incident angle equal to or smaller than 1 degree. Incidentally, it can be said that angles of the principal ray R1p of the first light beam R1 and the principal ray R2p of the second light beam R2 with respect to normal lines (Z direction) at their respective condensed positions are equal to or smaller than 1 degree. Incidentally, it can also be said that an object side (a processing target surface 18s side) of the optical apparatus 2 (the optical processing apparatus 1) has a telecentric characteristics.

As a result, even in a case where the processing target surface 18s is disposed to be slightly displaced in the Z direction from the irradiation target plane 17 due to its unevenness and the like, the desired X position and Y position on the processing target surface 18s can be irradiated with the first light beam R1, and the processing target surface 18s can be processed accurately. Similarly, the desired X position and Y position of the processing target surface 18s can be measured accurately.

Incidentally, in a case where the processing target surface 18s can always be precisely aligned with the irradiation target plane 17 such as a case where the processing target surface 18s is less uneven, incident angles of the principal ray R1p and the principal ray R2p relative to the irradiation target plane 17 may be equal to or larger than 1 degree.

Incidentally, in this specification, the "principal rays" may be a line connecting sequentially centers of gravity of light intensity in the cross sections of each light beam at different Z positions in each of the first light beam R1 or the second light beam R2.

In the optical processing apparatus 1 and the optical apparatus 2 in the first example embodiment, the axial chromatic aberration D 1 or the lateral chromatic aberration D2 generated between the first light beam R1 and the second light beam R2 is reduced. However, an adverse effect of the axial chromatic aberration D1 or the lateral chromatic aberration D2 may be further reduced by a numerical correction using the position information modification unit 25 described below.

The position information modification unit 25 is a unit configured to numerically corrects the axial chromatic aberration D1 or the lateral chromatic aberration D2. The position information modification unit 25 receives, from the control unit 22, a signal S8 that includes information related to the rotational angle of the swingable mirror 14 or the X position of the condensed point FP of the light beam propagating along the fourth optical path P4 that is determined by the rotational angle of the swingable mirror 14.

The position information modification unit 25 stores aberration information of the condensing optical system 16, which is numerical data indicating a relationship between the rotation angle of the swingable mirror 14 or the X position of the condensed point FP of the light beam propagating along the fourth optical path P4 and at least one of the axial chromatic aberration D1 or the lateral chromatic aberration D2. Moreover, the position information modification unit 25 may store information related to a so-called telecentricity of the condensing optical system 16. In the below-described description, the above-described aberration information and the information related to the telecentricity may be collectively referred to as information related to a characteristic of the condensing optical system 16. The position information modification unit 25 calculates at least one of the axial chromatic aberration D1 or the lateral chromatic aberration D2 at the condensed point FP from the above-described information related to the characteristics of the condensing optical system 16 based on the information related to the rotational angle of the swingable mirror 14 or the X position of the condensed point FP outputted from the control unit 22.

The position information modification unit 25 modifies the position information of the processing target surface 18s, which has been calculated by the calculation unit 24 and outputted as a signal S9, based on at least one of the axial chromatic aberration D1 or the lateral chromatic aberration D2 calculated above. Then, the position information modification unit 25 returns the modified position information of the processing target surface 18s to the calculation unit 24 as a signal S10.

Note that the position information modification unit 25 may return an amount by which the position information should be modified to the calculation unit 24 as the signal S10, instead of modifying the position information of the processing target surface 18s itself as described above. In this case, the calculation unit 24 may modify the position information of the processing target surface 18s by using the amount to be modified outputted from the position information modification unit 25.

Incidentally, in a case where the chromatic aberration of the optical apparatus 2 including the condensing optical system 16 is suppressed to a sufficiently small level by the correction optical system 11, the position information modification unit 25 may not be provided.

Moreover, in a case where the axial chromatic aberration D1 generated between the first light beam R1 and the second light beam R2 is suppressed to a sufficiently small level by the correction optical system 11 and the lateral chromatic aberration D2 is large, the position information of the processing target surface 18s may be modified by using the position information modification unit 25.

(Optical Design Example of Optical Apparatus)

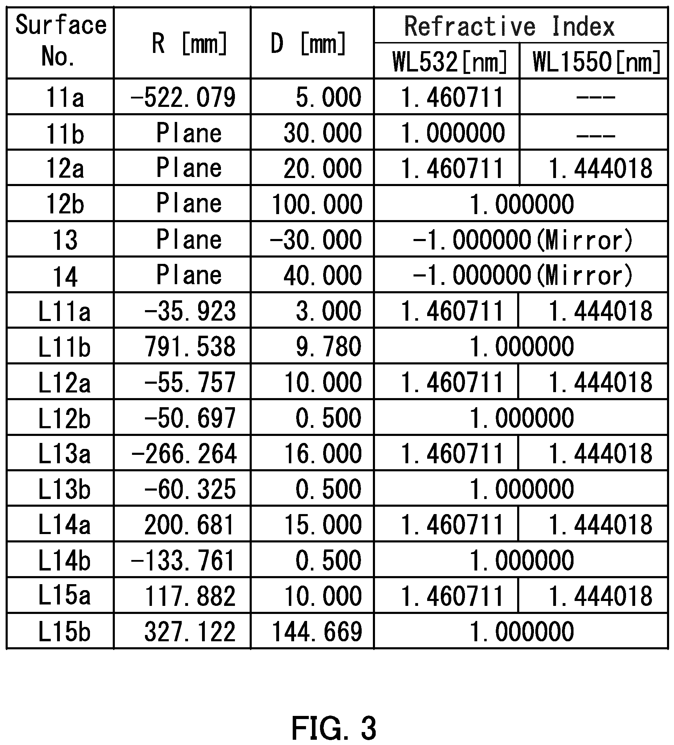

FIG. 3 illustrates an optical design example of the optical apparatus 2. The optical apparatus 2 in the design example illustrated in FIG. 3 condenses the first light beam R1 and the second light beam R2, which are parallel beams of 10 [mm] in diameter and which are supplied from the light source 10 and the measurement unit 23, respectively, generally on the irradiation target plane 17, as one example.

A number table illustrated in FIG. 3 illustrates a radius of curvature R [mm] and a surface interval D [mm] of each surface of an optical component such as a lens and a mirror included in the optical apparatus 2, wherein each surface is specified by a surface number (Surface No.) illustrated at the left end of the table, and a refractive index of the optical component.

The surface number illustrated in FIG. 3 is defined so that a surface number obtained by adding "a" to an end of a reference number of each optical component is used as the surface number of a surface, to which the light from the light source 10 or the measurement unit 23 enters, of each optical component (the correction optical system 11, the combining element 12, and the lenses L11 to L15) described above. For example, a surface number 11a is a surface number of a surface of the correction optical system 11 to which the light from the light source 10 enters.

Moreover, a surface number obtained by adding "b" to an end of the reference number of each optical component is used as the surface number of the surface from which the light from the light source 10 or the measurement unit 23 is emitted. For example, a surface number L11b is a surface number of a surface of the lens L11, which is included in the condensing optical system 16, at the lens L12 side.

Note that the surface number 13 and the surface number 14 represents the reflective surfaces of the fixed mirror 13 and the swingable mirror 14, respectively.

The surface interval D represents a space between the surface specified by the surface number and the next surface on the irradiation target plane 17 side relative to that face. Note that the surface interval D illustrated in the row for the surface number L15b is an interval between the surface of the surface number L15b and the irradiation target plane 17.

Moreover, the surface interval D between surface number 13 and surface number 14 is represented as a negative number because the fixed mirror 13 is a mirror.

The refractive index represents the refractive index of the optical member disposed between the surface specified by the surface number and the next face on the irradiation target plane 17 side relative to that surface.

The refractive index in the column having a label of WL532[nm] is the refractive index relative to light of 532[nm], which is one example of the wavelength (the first wavelength) of the first light beam R1.

The refractive indices in the column having a label of WL1550[nm] is the refractive indices relative to light of 1550[nm], which is one example of the wavelength (second wavelength) of the second light beam R2.

For the fixed mirror 13 and the swingable mirror 14, their refractive indices are represented as -1.

Incidentally, since the second light beam R2 having the second wavelength does not pass through the first optical path P1 on which the correction optical system 11 is disposed, the refractive index of the correction optical system 11, namely, the surface numbers 11a and 11b for the second wavelength are not illustrated.

Incidentally, in the optical apparatus 2 illustrated in FIG. 1, the lengths of the front-side third optical path P3a and the middle-side third optical path P3b in the third optical path P3 are illustrated to be shorter than those in the design example illustrated in FIG. 3, in order to illustrates a size of each optical member in sufficient size for description. The same applies to an interval between the correction optical system 11 and the combining element 12.

As can be seen from the refractive indices illustrated in FIG. 3, all of transmissive members (the correction optical system 11, the combining element 12, and the lenses L11-L15) of the optical apparatus 2 are made of the same material, quartz glass. Therefore, this optical system is not originally suitable for correcting the chromatic aberration, especially the axial chromatic aberration D1.

However, in the optical design example illustrated in FIG. 3, the correction optical system 11 disposed on the first optical path P1 allows the first condensed point FP1 (the condensed position) of the first light beam R1 in the vicinity of the irradiation target plane 17 to be closer to the second condensed point FP2 (the condensed position) of the second light beam R2.

Next, the optical design example illustrated in FIG. 3 will be described in more detail below.

The correction optical system 11 has a negative refractive power, and the focal length fc thereof at the first wavelength of 532 [nm] is -1133.2 [mm]. The condensing optical system 16 includes: a lens L11 (a first lens) that is disposed at the entrance side and that has a negative refractive power; and a second lens group G20 that includes a plurality of lenses L12 to L15 and that has a positive refractive power as a whole. The condensing optical system 16 has a positive refractive power as a whole, and the focal length fg thereof at the first wavelength of 532 [nm] is 100.0 [mm].

Therefore, a relationship between the focal length fc of the correction optical system 11 and the focal length fg of the condensing optical system 16 satisfies a following equation (1).

$$|fc| > 10 \times fg \text{ --- (1)}$$

Namely, an absolute value of the focal length fc of the correction optical system 11 is set to be 10 times or more than the focal length fg of the condensing optical system 16. In other words, an absolute value of the refractive power of the correction optical system 11 ($|1/fc|$) is set to be 1/10 or less than the refractive power of the condensing optical system 16.

This allows moderate correction of the chromatic aberration in the optical apparatus 2 as a whole without making the correction optical system 11 perform excessive correction of the chromatic aberration, and it is possible to more reduce the axial chromatic aberration D1 or the lateral chromatic aberration D2.

Incidentally, in a case where the axial chromatic aberration D1 or the lateral chromatic aberration D2 is allowed to remain to some extent, the correction optical system 11 and the condensing optical system 16 may not necessarily satisfy the equation (1).

In the optical design example illustrated in FIG. 3, the back focus of the combined optical system of the condensing optical system 16 and the correction optical system 11 at the first wavelength is 144.7 mm, and the back focus of the condensing optical system 16 at the second wavelength is 144.7 mm. The back focus of the condensing optical system 16 at the first wavelength is 137.0 mm, and the back focus of the condensing optical system 16 at the second wavelength is 144.7 mm. Therefore, the absolute value of the difference between the back focus of the combined optical system of the condensing optical system 16 and the correction optical system 11 at the first wavelength and the back focus of the condensing optical system 16 at the second wavelength is 0 mm, and is set to be smaller than the absolute value (7.7mm) of the difference between the back focus of the condensing optical system 16 at the first wavelength and the back focus of the condensing optical system 16 at the second wavelength.

This makes it possible to allow the condensed position of the first light beam R1 (the position of the first condensed point FP1) in the vicinity of the irradiation target plane 17 to be closer to the condensed position of the second light beam R2 (the position of the second condensed point FP2).

Note that the correction optical system 11 is not limited to the optical system having the negative refractive power, as described above or described below, but may be an optical system having a positive refractive power.

Incidentally, in the first example embodiment, instead of disposing the correction optical system 11 having the negative focal length (the negative refractive power) on the first optical path P1 at the entrance side of the first light beam R1 of the combining element 12, the correction optical system 11 having a positive focal length (a positive refractive power) may be disposed on the second optical path P2 at the entrance side of the second light beam R2 (in other words, at the entrance side of the detection light from the processing target object 18) of the combining element 12 (for example, the second optical path P2 between the measurement unit 23 and the combining element 12). Note that the correction optical system 11 having the positive focal length (the positive refractive power) may be disposed on the second optical path P2 between the measurement light source 23a and the combining element 12.

Here, in a case where the focal length of the condensing optical system 16 is positive (the refractive power is positive) and the axial chromatic aberration of the condensing optical system 16 is under-corrected (namely, in a case where the back focus of the condensing optical system 16 at the second wavelength is longer than the back focus of the condensing optical system 16 at the first wavelength), it is possible to allow the absolute value of the difference between the back focus of the combined optical system of the condensing optical system 16 and the correction optical system 11 (the correction optical system having the positive focal length) at the second wavelength and the back focus of the condensing optical system 16 at the first wavelength to be smaller than the absolute value of the difference between the back focus of the condensing optical system 16 at the second wavelength and the back focus of the condensing optical system 16 at the first wavelength, by setting the focal length of the correction optical system 11, which is disposed on the second optical path P2 at the entrance side of the second light beam R2 of the combining element 12, to be positive (the refractive power to be positive).

Incidentally, in a case where the correction optical system 11 is disposed on not the first optical path P1 but the second optical path P2, it can be said that the correction optical system 11 is not disposed on the first optical path P1.

Note that the condensing optical system 16 may be arranged to be interchangeable with a second condensing optical system different from the illustrated condensing optical system 16 (in the below-described description, it may be referred to as a "first condensing optical system"). Moreover, the correction optical system 11 may be arranged to be interchangeable with a second correction optical system different from the illustrated correction optical system 11 (in the below-described description, it may be referred to as a "first correction optical system"). In this case, the first condensing optical system and the second condensing optical system may be configured to be interchangeable with each other so that either one optical system is disposed on the optical path by a non-illustrated member change mechanism such as a turret or an auto tool changer. The first correction optical system and the second correction optical system may also be configured to be interchangeable with each other so that either one optical system is disposed on the optical path by a non-illustrated member change mechanism such as a turret or an auto tool changer.

In this case, in a case where the second condenser optical system described above is used as the condensing optical system 16, the second correction optical system described above may be used as the correction optical system 11.

The back focus of the first condensing optical system may be different from that of the second condensing optical system, and the focal length of the first correction optical system may be different from that of the second correction optical system.

In a case where the back focus of the first condensing optical system is shorter than the back focus of the second condensing optical system, the focal length of the second correction optical system may be longer than the focal length of the first correction optical system.

And, in a case where the back focus of the first condensing optical system is longer than the back focus of the second condensing optical system, the focal length of the second correction optical system may be shorter than the focal length of the first correction optical system.

(Effect of Optical Processing Apparatus in First Example Embodiment)

(1) The optical processing apparatus 1 in the first example embodiment described above includes the combining element 12 that combines the first optical path P1 of the first light beam R1 having the first wavelength and the second optical path P2 of the second light beam R2 having the second wavelength that is longer than the first wavelength; the condensing optical system 16 that has the positive refractive power and that condenses each of the first light beam R1 and the second light beam R2 from the combining element 12 on the processing target object 18; and the correction optical system 11 that has the negative refractive power. Moreover, the correction optical system 11 is disposed on the first optical path P1 at the entrance side of the combining element 12, one light beam of the first light beam R1 and the second light beam R2 is a light beam for processing the processing target object 18, and other light beam of the first light beam R1 and the second light beam R2 is a light beam for measuring the processing target object 18.

By this configuration, the position of the processing target surface 18s of the processing target object 18 can be detected with the second light beam R2 having the second wavelength, and the processing target surface 18s can be processed with the first light beam R1 having the first wavelength. Therefore, the position of the processing target surface 18s can be detected with high accuracy, and the processing target surface 18s can be processed with high accuracy based on the highly accurate detected result.

(Optical Processing Apparatus in Second Example Embodiment)

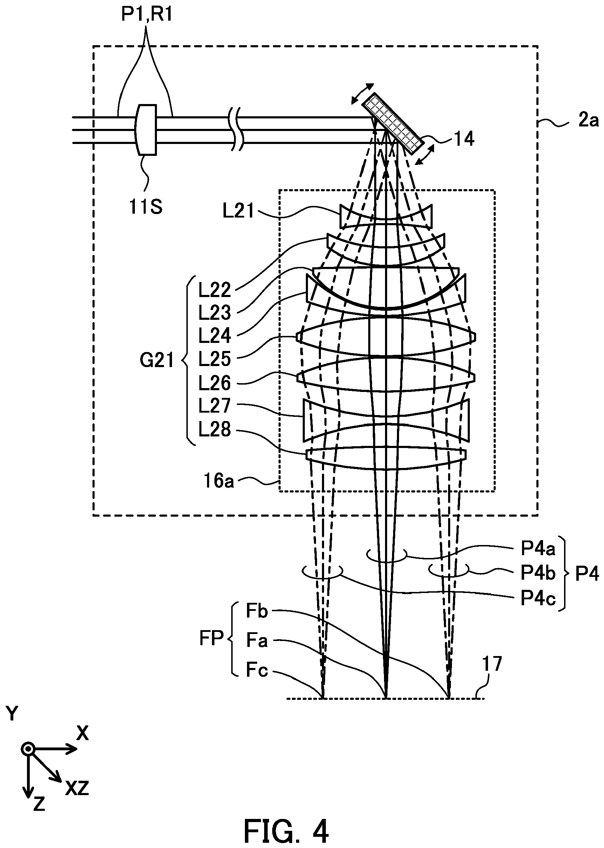

FIG. 4 is a diagram that schematically illustrates a configuration of a condensing optical system 16a of an optical apparatus 2a of an optical processing apparatus in a second example embodiment. Incidentally, the optical apparatus 2a is same as the optical apparatus 2 of the optical processing apparatus 1 in the first example embodiment, except that the condensing optical system 16 is replaced by the condensing optical system 16a and design data of the correction optical system 11 is changed, and thus, a description thereof is omitted as necessary.

Note that the optical processing apparatus in the second example embodiment is the one in which the optical apparatus 2 of the optical processing apparatus 1 in the first example embodiment is replaced by the optical apparatus 2a.

In the optical apparatus 2a, a correction optical system 11S is disposed on the first optical path P1 through which the first light beam R1 passes, as in the optical apparatus 2 of the optical processing apparatus 1 in the first example embodiment illustrated in FIG. 1. After the first light beam R1 and the second light beam R2 from the measurement unit 23 are combined by the combining element 12, they are reflected by the fixed mirror 13 and the swingable mirror 14 and enter the condensing optical system 16a. Then, the first light beam R1 and the second light beam R2 are generally condensed on the irradiation target plane 17 by the condensing optical system 16. In the optical processing apparatus 1 (the optical apparatus 2a) in the second example embodiment, the first wavelength of the first light beam R1 is different from the second wavelength of the second light beam R2, and the second wavelength is longer than the first, as in the first example embodiment.

FIG. 4 illustrates only the correction optical system 11S, the swingable mirror 14, and the condensing optical system 16a of the optical apparatus 2a, and the other components are omitted.

The condensing optical system 16a is an optical system including a plurality of lenses (L21 to L28). The lens L21 of these lenses, which is located on the most entrance side, is a lens having a negative refractive power, as one example. In the below described description, the lens L21 may be referred to as a first lens. And, the lenses (L22 to L28) located on the irradiation target plane 17 side (the downstream side) from the lens L21 constitute a second lens group G21 and have a positive refractive power as a whole. The first light beam R1 and the second light beam R2 are generally condensed on the irradiation target plane 17 by the refractive power of the condensing optical system 16a.

(Optical Design Example of Optical Apparatus of Optical Processing Apparatus in Second Example Embodiment)

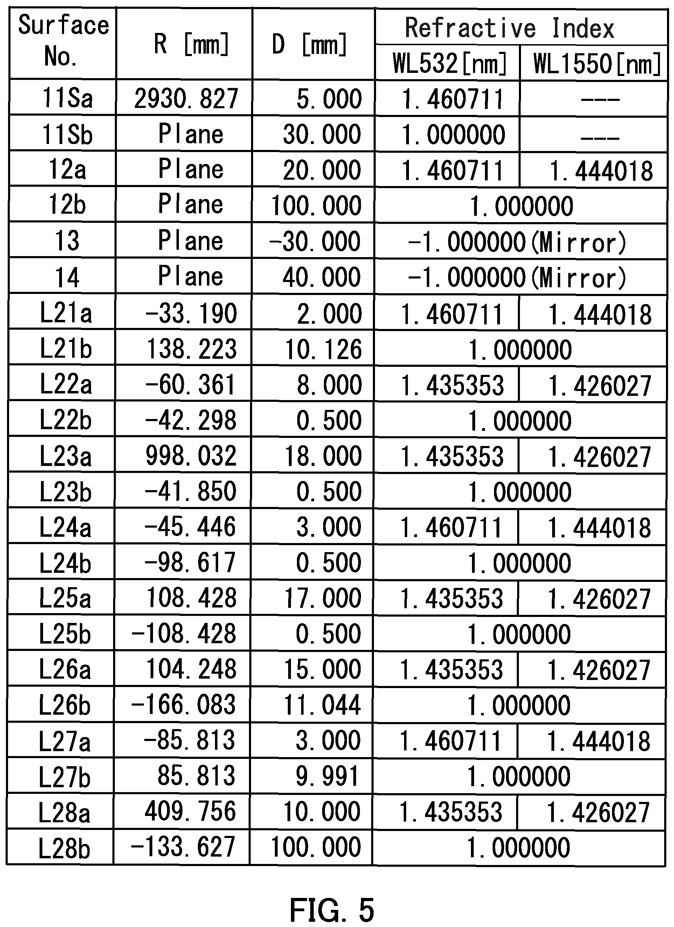

FIG. 5 illustrates an optical design example of the optical apparatus 2a of the optical processing apparatus in the second example embodiment. The items listed in the number table illustrated in FIG. 5 are the same as the items listed in the number table illustrated in FIG. 3. The surface number at a left end of the number table illustrated in FIG. 5 is a surface number obtained by adding "a" to the end of the reference number of each lens in a case where the surface is the surface to which the light from the light source 10 or the measurement unit 23 enters, and is a surface number obtained by adding "b" to the end of the reference number of each lens in a case where the surface is the surface from which the light is emitted.

As can be seen from the refractive indices illustrated in FIG. 5, each of transmission member (the correction optical system 11, the combining element 12, and the lenses L11 to L15) of the optical apparatus 2a is made of either one of two types of materials, the quartz glass and a fluorite. Compared to the optical apparatus 2 described above, the optical apparatus 2a is configured so that the lateral chromatic aberration D2 is corrected more and the axial chromatic aberration D1 is overcorrected by the condensing optical system 16a.

Additionally, the correction optical system 11S disposed on the first optical path P1 can make the excess correction of the axial chromatic aberration D1 of the condensing optical system 16a be closer to a proper correction state, and thus, the first condensed point FP1 (condensed position ) of the first light beam R1 in the vicinity of the irradiation target plane 17 can be brought closer to the second condensed point FP2 (condensed position) of the second light beam R2 of the second light beam R2.

Namely, in the optical processing apparatus 1 (the optical apparatus 2a) in the second example embodiment, the correction optical system 11S disposed on the first optical path P1 of the optical apparatus 2a makes the condensed position (a position of the first condensed point FP1) of the first light beam R1 in the vicinity of the irradiation target plane 17 be closer to the condensed position (a position of the second condensed point FP2) of the second light beam R2. Therefore, the magnitude of the above-described axial chromatic aberration D1 is reduced compared to a case where the correction optical system 11S is not disposed.

Here, in a case where the focal length of the condensing optical system 16a is positive (the refractive power is positive) and the axial chromatic aberration D1 of the condensing optical system 16a is overcorrected (namely, in a case where the back focus of the condensing optical system 16a at the first wavelength is longer than the back focus of the condensing optical system 16a at the second wavelength), it is possible to allow the absolute value of the difference between the back focus of the combined optical system of the condensing optical system 16a and the correction optical system 11S at the first wavelength and the back focus of the condensing optical system 16a at the second wavelength to be smaller than the absolute value of the difference between the back focus of the condensing optical system 16a at the first wavelength and the back focus of the condensing optical system 16a at the second wavelength, by setting the focal length of the correction optical system 11S disposed on the first optical path P1 of the optical apparatus 2a to be positive (the refractive power to be positive).

Incidentally, in the optical processing apparatus 1 and optical apparatus 2a in the second example embodiment, the lateral chromatic aberration D2 generated between the first light beam R1 and the second light beam R2 is corrected by the condensing optical system 16a. In this case, there is such an advantage that it is easier to correct the lateral chromatic aberration D2 by overcorrecting the axial chromatic aberration D 1 of the condensing optical system 16a.

Moreover, in the optical processing apparatus 1 including the optical apparatus 2a in the second example embodiment, the principal ray R1p and the principal ray R2p (see FIG. 2) are designed to enter the irradiation target plane 17 at an incident angle equal to or smaller than 1 degree. Note that the incident angle of the principal ray R1p and the principal ray R2p relative to the irradiation target plane 17 may be equal to or larger than 1 degree. Incidentally, it can be said that the angles of the principal ray R1p and the principal ray R2p with respect to the normal lines (the Z direction) at their respective condensed positions are equal to or smaller than 1 degree. Incidentally, it can also be said that an object side (a processing target surface 18s side) of the optical apparatus 2a has a telecentric characteristics.

The optical design example of the optical apparatus 2a illustrated in FIG. 5 is described in more detail below. In the optical apparatus 2a, the correction optical system 11S has a positive refractive power, and the focal length fc thereof at the first wavelength of 532 [nm] is 6361.5 [mm]. The condensing optical system 16a includes the lens L21 (the first lens) disposed on the entrance side and having the negative refractive power, and the second lens group G21 that includes the plurality of lenses L22 to L28 and that has the positive refractive power as a whole.

The condensing optical system 16a has a positive refractive power as a whole, and the focal length fg thereof at the first wavelength of 532 [nm] is 100.0 [mm].

Therefore, in the optical apparatus 2a, the focal length fc of the correction optical system 11 and the focal length fg of the condensing optical system 16a satisfy the relationship in the above equation (1).

The second lens group G21 includes: at least one positive lens such as the lens L28, which has a positive refractive power and is made of the fluorite that is a first lens material; and at least one negative lens such as the lens L27, which has a negative refractive power and is made of the quartz glass that is a second lens material. In the below described description, an Abbe number $v$ of the lens material is defined as $v = (n2-1)/(n2-n1)$ by using the refractive index n1 of the lens material relative to the first wavelength (533 [nm]) and the refractive index n2 of the lens material relative to the second wavelength (1550 [nm]).

In the optical apparatus 2a, an Abbe number v1 of the first lens material (the fluorite) and an Abbe number v2 of the second lens material (the quartz glass) satisfy a relationship in an equation (2).

$$\nu 1 > \nu 2 \; \text{---} \; (2)$$

This allows the chromatic aberration of the condensing optical system 16 to be corrected properly, and it is possible to more reduce the axial chromatic aberration D1 or the lateral chromatic aberration D2.

Incidentally, in a case where the axial chromatic aberration D1 or the lateral chromatic aberration D2 is allowed to remain to some extent, the Abbe number v1 and the Abbe number v2 may not necessarily satisfy the equation (2).

In the optical design example illustrated in FIG. 5, the back focus of the combined optical system of the condensing optical system 16a and the correction optical system 11S at the first wavelength is 99.9 mm, and the back focus of the condensing optical system 16 at the second wavelength is 100.0 mm. The back focus of the condensing optical system 16 at the first wavelength is 101.5 mm, and the back focus of the condensing optical system 16 at the second wavelength is 100.0 mm. Therefore, the absolute value of the difference between the back focus of the combined optical system of the condensing optical system 16a and the correction optical system 11S at the first wavelength and the back focus of the condensing optical system 16a at the second wavelength is 0.1 mm, and is set to be smaller than the absolute value (1.5mm) of the difference between the back focus of the condensing optical system 16a at the first wavelength and the back focus of the condensing optical system 16a at the second wavelength.

This makes it possible to allow the condensed position of the first light beam R1 (the position of the first condensed point FP1) in the vicinity of the irradiation target plane 17 to be closer to the condensed position of the second light beam R2 (the position of the second condensed point FP2).

Incidentally, in the second example embodiment, instead of disposing the correction optical system 11S having the positive focal length (the positive refractive power) on the first optical path P1 at the entrance side of the first light beam R1 of the combining element 12 of the optical processing apparatus (the optical apparatus 2a), the correction optical system 11S having a negative focal length (a negative refractive power) may be disposed on the second optical path P2 at the entrance side of the second light beam R2 of the combining element 12 (for example, the second optical path P2 between the measurement unit 23 and the combining element 12). Note that the correction optical system 11S having the negative focal length (the negative refractive power) may be disposed on the second optical path P2 between the measurement light source 23a and the combining element 12.

Here, in a case where the focal length of the condensing optical system 16a is positive (the refractive power is positive) and the axial chromatic aberration of the condensing optical system 16a is over-corrected (namely, in a case where the back focus of the condensing optical system 16a at the second wavelength is shorter than the back focus of the condensing optical system 16a at the first wavelength), it is possible to allow the absolute value of the difference between the back focus of the combined optical system of the condensing optical system 16a and the correction optical system 11S (the correction optical system having the negative focal length) at the second wavelength and the back focus of the condensing optical system 16a at the first wavelength to be smaller than the absolute value of the difference between the back focus of the condensing optical system 16a at the second wavelength and the back focus of the condensing optical system 16a at the first wavelength, by setting the focal length of the correction optical system 11S, which is disposed on the second optical path P2 at the entrance side of the second light beam R2 of the combining element 12, to be negative (the refractive power to be negative).

Incidentally, the lateral chromatic aberration D2 generated between the first light beam R1 and the second light beam R2 is corrected by the condensing optical system 16a, in this case, there is such an advantage that the lateral chromatic aberration D2 is corrected easier by overcorrecting the axial chromatic aberration D1 of the condensing optical system 16a.

Note that the condensing optical system 16a may be arranged to be interchangeable with a second condensing optical system different from the illustrated condensing optical system 16a (in the below-described description, it may be referred to as a "first condensing optical system"). Moreover, the correction optical system 11S may be arranged to be interchangeable with a second correction optical system different from the illustrated correction optical system 11S (in the below-described description, it may be referred to as a "first correction optical system"). In this case, the first condensing optical system and the second condensing optical system may be configured to be interchangeable with each other so that either one optical system is disposed on the optical path by a non-illustrated member change mechanism such as a turret or an auto tool changer. The first correction optical system and the second correction optical system may also be configured to be interchangeable with each other so that either one optical system is disposed on the optical path by a non-illustrated member change mechanism such as a turret or an auto tool changer.

In this case, in a case where the above-described second condensing optical system is used as the condensing optical system 16a, the above-described second correction optical system may be used as the correction optical system 11S.

The back focus of the first condensing optical system may be different from the back focus of the second condensing optical system, and the focal length of the first correction optical system may be different from the focal length of the second correction optical system.

In a case where the back focus of the first condensing optical system at the first wavelength is shorter than the back focus of the second condensing optical system at the first wavelength in a situation where the focal length of the condensing optical system 16a is positive (the refractive power is positive), the axial chromatic aberration D1 of the condensing optical system 16a is overcorrected, and the focal length of the correction optical system 11S placed on the first optical path P1 of the optical apparatus 2a is positive (the refractive power is positive) as in the second example embodiment, the focal length of the second correction optical system at the first wavelength may be longer than the focal length of the first correction optical system at the first wavelength.

On the other hand, in a case where the back focus of the first condensing optical system at the first wavelength is longer than the back focus of the second condensing optical system at the first wavelength, the focal length of the second correction optical system at the first wavelength may be shorter than the focal length of the first correction optical system at the first wavelength.

Incidentally, in a case where the absolute value of the back focus of the first condensing optical system at the first wavelength is smaller than the absolute value of the back focus of the second condensing optical system at the first wavelength, the absolute value of the focal length of the second correction optical system at the first wavelength may be larger than the absolute value of the focal length of the first correction optical system at the first wavelength.

On the other hand, in a case where the absolute value of the back focus of the first condensing optical system at the first wavelength is larger than the absolute value of the back focus of the second condensing optical system at the first wavelength, the absolute value of the focal length of the second correction optical system at the first wavelength may be smaller than the absolute value of the focal length of the first correction optical system at the first wavelength.

Incidentally, in a case where the back focus of the first condensing optical system at the second wavelength is shorter than the back focus of the second condensing optical system at the second wavelength in a situation where the focal length of the condensing optical system 16a is positive (the refractive power is positive), the axial chromatic aberration D1 of the condensing optical system 16a is overcorrected, and not the correction optical system 11S having the positive focal length (the negative refractive power) in the second example embodiment but the correction optical system 11S having the negative focal length (the negative refractive power) is disposed on the second optical path P2 at the entrance side of the second light beam R2 of the combining element 12 (for example, on the second optical path P2 between the measurement unit 23 and the combining element 12), the focal length of the second correction optical system at the second wavelength may be longer than the focal length of the first correction optical system at the second wavelength.

On the other hand, in a case where the back focus of the first condensing optical system at the second wavelength is longer than the back focus of the second condensing optical system at the second wavelength, the focal length of the second correction optical system at the second wavelength may be shorter than the focal length of the first correction optical system at the second wavelength.

Incidentally, in a case where the absolute value of the back focus of the first condensing optical system at the second wavelength is smaller than the absolute value of the back focus of the second condensing optical system at the second wavelength, the absolute value of the focal length of the second correction optical system at the second wavelength may be larger than the absolute value of the focal length of the first correction optical system at the second wavelength.

On the other hand, in a case where the absolute value of the back focus of the first condensing optical system at the second wavelength is larger than the absolute value of the back focus of the second condensing optical system at the second wavelength, the absolute value of the focal length of the second correction optical system at the second wavelength may be smaller than the absolute value of the focal length of the first correction optical system at the second wavelength.

In each of the above-described example embodiments, a below-described modified example, and a below-described example embodiment, the number of lenses included in the condensing optical system 16 or 16a is not limited to the above-described number, but it may include any other number of lenses, or may include a mirror or a diffractive optical element.

Moreover, the condensing optical system 16 or 16a does not include laminated lenses, but may be an optical system including the laminated lenses.

The correction optical system 11 or 1 1S may also include a plurality of lenses instead of a single lens, or may include a mirror or a diffractive optical element.

The first wavelength used for the optical processing and the second wavelength used for the measurement are not limited to the above-described wavelengths, but may be other wavelengths, respectively.

Moreover, the first lens material and the second lens material are also not limited to the fluorite and the quartz glass described above, respectively, but may be any other translucent materials.

The swingable mirror 14 may not only swing around the rotational axis parallel to the Y direction as described above, but may also swing around a rotational axis parallel to the XZ direction. In this case, the position of the condensed point FP on the irradiation target plane 17 is movable not only in the X direction as described above but also in the Y direction. Note that the swingable mirror 14 may swing around the rotational axis parallel to the XZ direction instead of the Y direction. In this case, the position of the condensed point FP on the irradiation target plane 17 is movable in the Y direction in this case.

Note that the swingable mirror 14 may not be provided in a case where it is sufficient to position the relative positions of the processing target object 18 and the condensed point FP in the X direction and the Y direction by moving the sample table 19 relative to the guide 20.

Incidentally, the X position (or even the Y position) of the condensed point FP on the irradiation target plane 17 is movable at high speed in a case where the swingable mirror 14 is provided as described above. This allows the condensed point FP to be moved at high speed on the processing target surface 18s of the processing target object 18, thereby improving the processing capacity of the optical processing apparatus 1 more.

Note that a swingable mirror that is swingable may be provided instead of the fixed mirror 13. In this case, the swingable mirror in place of the fixed mirror 13 may swing around a rotational axis parallel to the XZ direction, and the swingable mirror 14 may swing around the rotation axis parallel to the Y direction as described above. In this case, the first light beam R1 and the second light beam R2 are scanned along the X direction and the Y direction in a plane of the irradiation target plane 17.

Note that a plurality of swingable mirrors may be disposed on the third optical path P3 (namely, the optical path in which at least a part of the first optical path P1 and the second optical path P2 are overlapped with each other) in addition to the swingable mirror 14. In this case, the fixed mirror 13 may be removed from the third optical path P3.

As described above, the optical processing apparatus 1 and the optical processing apparatus in the second example embodiment may not include the position information modification unit 25.

Moreover, the optical processing apparatus 1 may not include the calculation unit 24. In a case the calculation unit 24 is not used, the measurement unit 23 may output the information related to the detected light intensity signal of the second light beam R2 to an external calculation unit (not illustrated), and the external calculation unit may calculate the position information of the processing target surface 18. Note that an optical processing apparatus 1a in the below-described modified example may not include the position information modification unit 25.

Note that the optical processing apparatus 1, the optical processing apparatus in the second example embodiment, the optical processing apparatus 1a (described below), and the optical processing apparatus in a third example embodiment (described below) may not include the light source 10, and the first light beam L1 may be supplied from a light source disposed outside the optical processing apparatus 1, the optical processing apparatus in the second example embodiment, the optical processing apparatus 1a (described below), and the optical processing apparatus in a third example embodiment (described below) through a light guide member such as an optical fiber, for example. Note that the optical processing apparatus 1, the optical processing apparatus in the second example embodiment, the optical processing apparatus 1a (described below), and the optical processing apparatus in a third example embodiment (described below) may not include the measurement light source 23a, and the second light beam L2 may be supplied from a light source disposed outside the optical processing apparatus 1, the optical processing apparatus in the second example embodiment, the optical processing apparatus 1a (described below), and the optical processing apparatus in a third example embodiment (described below) through a light guide member such as an optical fiber, for example. Note that the optical processing apparatus 1, the optical processing apparatus in the second example embodiment, the optical processing apparatus 1a (described below), and the optical processing apparatus in a third example embodiment (described below) may not include at least one of the control unit 22, the calculation unit 24, the position information modification unit 25, and it may be disposed outside the optical processing apparatus 1, the optical processing apparatus in the second example embodiment, the optical processing apparatus 1a (described below), and the optical processing apparatus in a third example embodiment (described below), for example. Note that at least one of the light source 10 and the measurement unit 23 may be included in the optical apparatus 2 and the optical apparatus 2a. Note that at least one of the control unit 22 and the calculation unit 24 may be included in the optical apparatus 2 and the optical apparatus 2a.

Incidentally, in each of the above-described example embodiments, the below-described modified example, and the below-described example embodiment, the measurement unit 23 may not be the interferometric measurement apparatus as described above. For example, the measurement unit 23 may be an OTC (Optical Coherence Tomography) type of measurement apparatus. One example of the OTC type of measurement apparatus is disclosed in JP2020-101499A. For example, the measurement unit 23 may be a measurement apparatus including a white confocal displacement meter. One example of the white confocal displacement meter is disclosed in JP2020-085633A. For example, the measurement unit 23 may be a phase modulation type of measurement apparatus. One example of the phase modulation type of measurement apparatus is disclosed in JP2010-025922A. For example, the measurement unit 23 may be an intensity modulation type of measurement apparatus. One example of the intensity modulation type of measurement apparatus is disclosed in JP2016-510415A and US2014/226145A1.

Incidentally, in each of the above-described example embodiments, the below-described modified example, and the below-described example embodiment, the optical processing apparatus 1, the optical processing apparatus in the second example embodiment, the optical processing apparatus 1a (described below), and the optical processing apparatus in the third example embodiment (described below) may determine at least one of the irradiation position, the irradiation frequency, and the irradiation condition of the first light beam R1 for the processing target surface 18s based on the position information of the processing target surface 18s, which is detected and calculated by the measurement unit 23 and the calculation unit 24 using the second light beam R2, and so on before processing the processing target object 18 by the first light beam R1.

Moreover, in each of the above-described example embodiments, the below-described modified example, and the below-described example embodiment, the optical processing apparatus 1, the optical processing apparatus in the second example embodiment, the optical processing apparatus 1a (described below), and the optical processing apparatus in the third example embodiment (described below) may measure, by using the second light beam R2, the part processed by the first light beam R1 and evaluate a condition or a quality of the part processed by the first light beam R1 after processing the processing target surface 18s by the first light beam R1. For example, the optical processing apparatus 1, the optical processing apparatus in the second example embodiment, the optical processing apparatus 1a (described below), and the optical processing apparatus in the third example embodiment (described below) may calculate the position information of the part processed by the first light beam R1, and compare the calculated position information with predetermined reference position information (for example, CAD data of the processing target object 18) to determine whether to re-process or complete processing the part processed by the first light beam R1 after processing the processing target surface 18s by the first light beam R1.

In a case where the part processed by the first light beam R1 is re-processed, the optical processing apparatus 1, the optical processing apparatus 1, the optical processing apparatus in the second example embodiment, the optical processing apparatus 1a (described below), and the optical processing apparatus in the third example embodiment (described below) may determine at least one of the irradiation position, the irradiation frequency, and the irradiation condition of the first light beam R1 for the processing target surface 18s based on the position information of the part processed by the first light beam R1, and may re-process the part processed by the first light beam R1. Moreover, the, optical processing apparatus 1, 1a may calculate the position information of the part processed by the first light beam R1, and compare the calculated position information with the predetermined reference position information (for example, the CAD data of the processing target object 18) to determine whether the part processed by the first light beam R1 has been processed to have a desired shape after processing the processing target surface 18s by the first light beam R1.

Incidentally, in each of the above-described example embodiments, the optical processing apparatus 1, the optical processing apparatus in the second example embodiment, and the optical processing apparatus in the third example embodiment (described below) may perform the measurement of the processing target object 18 (the detection of the detection light from the processing target surface 18s and the calculation of the position information and so on) by the second light beam R2 while processing the processing target object 18 by the first light beam R1. In this case, the processing and the measurement of the processing target object 18 can be performed simultaneously.

Incidentally, in a case where the optical processing apparatus 1, the optical processing apparatus in the second example embodiment, and the optical processing apparatus in the third example embodiment (described below) simultaneously process the processing target object 18 by the first light beam R1 and measure the processing target object 18 by the second light beam R2, the detection light from the processing target surface 18s may be detected along with the processing of the processing target object 18 by the first light beam R1 and t the position information and so on may be calculated based on the detection light after processing the processing target object 18 by the first light beam R1.

(Effect of Optical Processing Apparatus in Second Example Embodiment)

(2) The optical processing apparatus in the second example embodiment described above includes: the combining element 12 that combines the first optical path P1 of the first light beam R1 having the first wavelength and the second optical path P2 of the second light beam R2 having the second wavelength that is longer than the first wavelength; the condensing optical system 16a that has the positive refractive power and that condenses each of the first light beam R1 and the second light beam R2 from the combining element 12 on the processing target object 18; and the correction optical system 11S that has the positive refractive power. Moreover, the correction optical system 11S is disposed on the second optical path P2 at the entrance side of the combining element 12, one light beam of the first light beam R1 and the second light beam R2 is a light beam for processing the processing target object 18, and other light beam of the first light beam R1 and the second light beam R2 is a light beam for measuring the processing target object 18.

By this configuration, an effect that is same as that of the above-described optical processing apparatus in the first example embodiment is achieved.

(Optical Processing Apparatus in Modified Example)

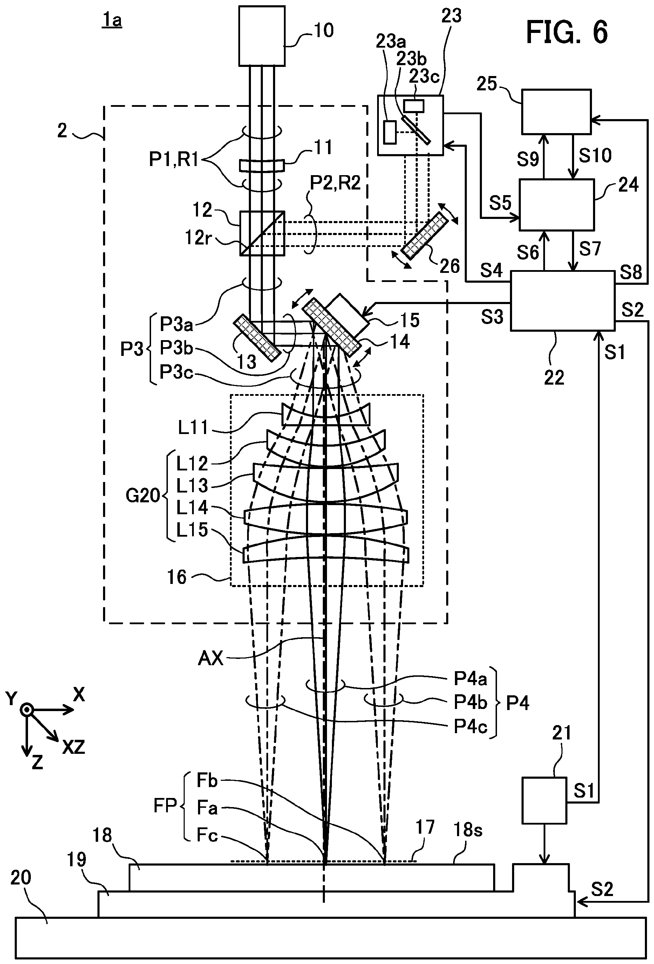

Next, with reference to FIG. 6, the optical processing apparatus 1a in a modified example will be described. A configuration of the optical processing apparatus 1a is generally the same as that of the optical processing apparatus 1 in the first example embodiment and the second example embodiment described above, and thus, the description about the same configuration will be omitted by assigning the same reference number thereto.

The optical processing apparatus 1a in the modified example is different from the optical processing apparatus 1 in the first example embodiment and the second example embodiment described above in that a movable mirror 26 is disposed on the second optical path P2 between the measurement unit 23 and the combining element 12. By setting an orientation angle of a reflective surface of the movable mirror 26 to be a predetermined angle, the position of the second condensed point FP2 of the second light beam R2 relative to the first condensed point FP1 of the first light beam R1 on the processing target surface 18s of the processing target object 18 can be shifted by a predetermined distance along a direction in the XY plane. Incidentally, the movable mirror 26 may be configured to set the orientation angle of the reflective surface to be the predetermined angle by using an axis parallel to the Y direction as a center.

In a part that is irradiated with the first light beam R1 to be processed, there is a possibility that the measurement with high accuracy cannot be performed by the second light beam R2 due to fumes and so on generated from the processing target surface 18s.

The optical processing apparatus 1a in the modified example can detect the information related to the position or the state of the processing target surface 18s at a position that is different from a position at which the processing is performed by the first light beam R1, and thus, it is possible to prevent the deterioration of the measurement accuracy due to fumes and so on.

Incidentally, the optical processing apparatus 1a in the modified example may measure the processing target object 18 by the second light beam R2 while processing the processing target object 18 by the first light beam R1. In this case, the processing and the measurement of the processing target object 18 can be performed simultaneously while preventing deterioration of the measurement accuracy due to the fumes and so on. Incidentally, in a case where the processing of the processing target object 18 by the first light beam R1 and the measurement of the processing target object 18 by the second light beam R2 (the detection of the detection light from the processing target surface 18s and the calculation of the position information and so on) is performed simultaneously, the optical processing apparatus 1a in the modified example may detect the detection light from the processing target object 18 while processing the processing target object 18 by the first light beam R1, and may perform the calculation of the position of the position information and the like based on the detection light after the processing of the processing target object 18 by the first light beam R1 is completed.

Incidentally, instead of a deflection of the second light beam R2 by the movable mirror 26 described above, a relay lens system may be disposed on the second optical path P2 and a parallel plate glass may be disposed near an intermediate condensed point formed by the relay lens system, for example. In this case, by tilting direction of a normal line of an entrance surface and an emission surface of the parallel plate glass from the propagating direction of the second light beam R2, the position of the second condensed point FP2 relative to the first condensed point FP1 on the processing target surface 18s can be shifted by a predetermined distance along a direction in the XY plane.

Incidentally, the position at which the movable mirror 26 is disposed is not limited to the second optical path P2 between the measurement unit 23 and the combining element 12 in the optical processing apparatus 1a. For example, the movable mirror 26 may be disposed on the first optical path P1 between the light source 10 and the combining element 12. Moreover, in addition to the movable mirror 26 disposed on the second optical path P2 between the measurement unit 23 and the combining element 12, another movable mirror may be disposed on the first optical path P1 between the light source 10 and the combining element 12.

(Optical Processing Apparatus in Third Example Embodiment)

Next, an optical processing apparatus in a third example embodiment will be described below.

However, the configuration of the optical processing apparatus in the third example embodiment is generally the same as the configuration of the optical processing apparatus in the first example embodiment and the second example embodiment illustrated in FIG. 1 to FIG. 5. Thus, in the below-described description, with reference to FIG. 1 and FIG. 2, a differences between the optical processing apparatus in the third example embodiment and the optical processing apparatus in the first example embodiment and the second example embodiment will be described, and a description about a common configuration will be omitted as necessary.

The optical processing apparatus in the third example embodiment does not include the correction optical system 11. Therefore, the amount of the axial chromatic aberration D1 or the lateral chromatic aberration D2 in the vicinity of the irradiation target plane 17 is larger than that of the optical processing apparatus in the first example embodiment and the second example embodiment described above.

The optical processing apparatus in the third example embodiment also calculates the position of the processing target surface 18s by the measurement unit 23 and the calculation unit 24 using the second light beam R2 having the second wavelength.

The optical processing apparatus in the third example embodiment includes the above-described position information modification unit 25. And, the position information modification unit 25 stores aberration information of the condensing optical system 16 that is numerical data indicating a relationship between the rotational angle of the swingable mirror 14 or the X position of the condensed point FP and at least one of the axial chromatic aberration D1 or the lateral chromatic aberration D2. Moreover, the position information modification unit 25 may also store information related to the so-called telecentricity of the condensing optical system 16.

The position information modification unit 25 calculates at least one of the axial chromatic aberration D1 or the lateral chromatic aberration D2 at the condensed point FP from the above-described information related to the characteristic of the condensing optical system 16 based on the information related to the rotational angle of the swingable mirror 14 or the X position of the condensed point FP outputted from the control unit 22. The position information modification unit 25 modifies the position information of the processing target surface 18s, which has been calculated by the calculation unit 24 and outputted as the signal S9, based on at least one of the axial chromatic aberration D1 or the lateral chromatic aberration D2 calculated above. Then, the position information modification unit 25 returns the modified position information of the processing target surface 18s to the calculation unit 24 as a signal S10.

Since including the position information modification unit 25, the optical processing apparatus in the third example embodiment can accurately detect the position of the processing target surface 18s and can process the processing target surface 18s with high accuracy, even in a case where the optical apparatus 2 having a relatively large axial chromatic aberration D1 or lateral chromatic aberration D2 is used.

Incidentally, both of the position information modification unit 25 and the correction optical system 11 may be provided to correct chromatic aberration with higher precision, as with the optical processing apparatus in the first example embodiment and the second example embodiment described above,

(Effect of Optical Processing Apparatus in Third Example Embodiment)

(3) The optical processing apparatus in the third example embodiment includes: the combining element 12 that combines the first light beam R1 which is supplied along the first optical path P1 and which has the first wavelength and the second light beam R2 which is supplied along the second optical path P2 and which has the second wavelength different from the first wavelength; the condensing optical system 16 that condenses, on the irradiation target plane 17, each of the first light beam R1 and the second light beam R2 combined by the combining element 12; the holding unit 19 configured to hold the processing target object 18 so that the processing target surface 18s is located at the irradiation target plane 17; and the measurement unit 23 configured to detect the detection light of the second light beam R2 that is reflected or scattered by the processing target surface 18s and that returns to the second optical path P2 through the condensing optical system 16 and the combining element 12. Furthermore, it includes: the calculation unit 24 configured to calculate, based on the information related to the intensity of the detection light detected by the measurement unit 23, the position information of the part of the processing target surface 18s that is irradiated with the second light beam R2; and the position information modification unit 25 configured to modify, based on the information related to a characteristic of the condensing optical system 16, the position information calculated by the calculation unit 24.

Due to this configuration, it is possible to accurately detect the position of the processing target surface 18s and to process the processing target surface 18s with high accuracy, even in a case where the optical apparatus 2 having a relatively large axial chromatic aberration D1 or lateral chromatic aberration D2 is used.

The present invention is not limited to the above-described content. Other possible aspect within a scope of a technical concept of the present invention is also included within the scope of the present invention. The present example embodiment may combine all or a part of the above-described aspects.

(Supplementary Note)

The skilled person can understand that the plurality of example embodiments and the modified example thereof are specific examples of below-described aspects.

(Note 1)

An optical apparatus including:

a combining element that combines a first optical path of a first light beam having a first wavelength and a second optical path of a second light beam having a second wavelength that is longer than the first wavelength;
a condensing optical system that has a positive refractive power and that condenses each of the first light beam and the second light beam from the combining element; and
a correction optical system that has a negative refractive power,
wherein
the correction optical system is disposed on the first optical path at an entrance side of the combining element.

(Note 2)

An optical apparatus including:

a combining element that combines a first optical path of a first light beam having a first wavelength and a second optical path of a second light beam having a second wavelength that is longer than the first wavelength;
a condensing optical system that has a positive refractive power and that condenses each of the first light beam and the second light beam from the combining element on a processing target object; and
a correction optical system that has a positive refractive power,
wherein
the correction optical system is disposed on the first optical path at an entrance side of the combining element,
a back focus of the condensing optical system at the first wavelength is longer than a back focus of the condensing optical system at the second wavelength.

(Note 3)

The optical apparatus according to the Note 1 or the Note 2, wherein
an absolute value of a difference between a back focus of a combined optical system of the condensing optical system and the correction optical system at the first wavelength and a back focus of the condensing optical system at the second wavelength is smaller than an absolute value of a difference between a back focus of the condensing optical system at the first wavelength and the back focus of the condensing optical system at the second wavelength.

(Note 4)

An optical apparatus including:

a combining element that combines a first optical path of a first light beam having a first wavelength and a second optical path of a second light beam having a second wavelength that is longer than the first wavelength;
a condensing optical system that has a positive refractive power and that condenses each of the first light beam and the second light beam from the combining element; and
a correction optical system that has a positive refractive power,
wherein
the correction optical system is disposed on the second optical path at an entrance side of the combining element.

(Note 5)

An optical apparatus comprising:

a combining element that combines a first optical path of a first light beam having a first wavelength and a second optical path of a second light beam having a second wavelength that is longer than the first wavelength;
a condensing optical system that has a positive refractive power and that condenses each of the first light beam and the second light beam from the combining element on a processing target object; and
a correction optical system that has a negative refractive power,
wherein
the correction optical system is disposed on the second optical path at an entrance side of the combining element,
a back focus of the condensing optical system at the first wavelength is longer than a back focus of the condensing optical system at the second wavelength.

(Note 6)

The optical apparatus according to the Note 4 or the Note 5, wherein
an absolute value of a difference between a back focus of a combined optical system of the condensing optical system and the correction optical system at the second wavelength and a back focus of the condensing optical system at the first wavelength is smaller than an absolute value of a difference between a back focus of the condensing optical system at the second wavelength and the back focus of the condensing optical system at the first wavelength.

(Note 7)

The optical apparatus according to any one of the Note 1 to the Note 6, wherein

in a case where the condensing optical system is regarded as a first condensing optical system and the correction optical system is regarded as a first correction optical system,
the first condensing optical system is arranged to be interchangeable with a second condensing optical system that is different from the first condensing optical system,
the first correction optical system is arranged to be interchangeable with a second correction optical system that is different from the first correction optical system.

(Note 8)

The optical apparatus according to the Note 7, wherein
the second correction optical system is used as the correction optical system in a case where second condensing optical system is used as the condensing optical system.

(Note 9)

The optical apparatus according to the Note 7 or the Note 8, wherein

a back focus of the first condensing optical system is different from that of the second condensing optical system,
a focal length of the first correction optical system is different from that of the second correction optical system.

(Note 10)

The optical apparatus according to any one of the Note 7 to the Note 9 depending on any one of the Note 1 to the Note 3, wherein

a focal length of the second correction optical system is longer than a focal length of the first correction optical system in a case where a back focus of the first condensing optical system is shorter than a back focus of the second condensing optical system, the focal length of the second correction optical system is shorter than the focal length of the first correction optical system in a case where the back focus of the first condensing optical system is longer than the back focus of the second condensing optical system.

(Note 11)

The optical apparatus according to any one of the Note 7 to the Note 9 depending on the Note 2, wherein

a focal length of the second correction optical system at the first wavelength is longer than a focal length of the first correction optical system at the first wavelength in a case where a back focus of the first condensing optical system at the first wavelength is shorter than a back focus of the second condensing optical system at the first wavelength, the focal length of the second correction optical system at the first wavelength is shorter than the focal length of the first correction optical system at the first wavelength in a case where the back focus of the first condensing optical system at the first wavelength is longer than the back focus of the second condensing optical system at the first wavelength.

(Note 12)

The optical apparatus according to any one of the Note 7 to the Note 9 depending on the Note 5, wherein

a focal length of the second correction optical system at the second wavelength is longer than a focal length of the first correction optical system at the second wavelength in a case where a back focus of the first condensing optical system at the second wavelength is shorter than a back focus of the second condensing optical system at the second wavelength, the focal length of the second correction optical system at the second wavelength is shorter than the focal length of the first correction optical system at the second wavelength in a case where the back focus of the first condensing optical system at the second wavelength is longer than the back focus of the second condensing optical system at the second wavelength.

(Note 13)

The optical apparatus according to any one of the Note 1 to the Note 3 or the Note 7 to the Note 11 depending on any one of the Note 1 to the Note 3, wherein the correction optical system is not disposed on the second optical path.

(Note 14)

The optical apparatus according to any one of the Note 4 to the Note 6, the Note 7 to the Note 10 depending on any one of the Note 4 to the Note 6, or the Note 12, wherein
the correction optical system is not disposed on the first optical path.

(Note 15)

The optical apparatus according to any one of the Note 1 to the Note 14, wherein

the condensing optical system includes: a first lens having a negative refractive power; and a second lens group having a positive refractive power as a whole in this order from the combining element side, a focal length fc of the correction optical system at the first wavelength and a focal length fg of the condensing optical system at the first wavelength satisfy such a relationship that $|fc| > 10 \times fg$.

(Note 16)

The optical apparatus according to any one of the Note 1 to the Note 15, wherein

the condensing optical system includes: a first lens having a negative refractive power; and a second lens group having a positive refractive power as a whole in this order from the combining element side, the second lens group includes:

one or more positive lens that has a positive refractive power and that is made from a first lens material; and
one or more negative lens that has a negative refractive power and that is made from a second lens material,
an Abbe number v1 of the first lens material and an Abbe number v2 of the second lens material satisfy such a relationship that v1 > v2, wherein an Abbe number v of a lens material is defined as v = (n2-1) / (n2-n1) by using a refractive index n1 of the lens material relative to the first wavelength and a refractive index n2 of the lens material relative to the second wavelength.

(Note 17)

The optical apparatus according to any one of the Note 1 to the Note 16, wherein the optical apparatus includes a deflection scanning unit that is disposed on the first optical path and the second optical path between the combining element and the condensing optical system and that deflects the first light beam and the second light beam to move, along an axis intersecting with an optical axis of the condensing optical system, condensed positions of the first light beam and the second light beam emitted from the condensing optical system.

(Note 18)

The optical apparatus according to any one of the Note 1 to the Note 17, wherein an angle between a principal ray of each of the first light beam and the second light beam and a normal line at a condensed position thereof is equal to or smaller than 1 degree.

(Note 19)

An optical processing apparatus including:

the optical apparatus according to any one of the Note 1 to the Note 18; and
a support unit configured to support a processing target object,
wherein
one light beam of the first light beam and the second light beam is a light beam for processing the processing target object,
other light beam of the first light beam and the second light beam is a light beam for measuring the processing target object.

(Note 20)

The optical processing apparatus according to the Note 19, wherein

the processing target object is irradiated with the one light beam through combining element and the condensing optical system,
the processing target object is irradiated with the other light beam through combining element and the condensing optical system,
the optical processing apparatus further includes a measurement unit configured to detect, through the condensing optical system and the combining element, detection light caused by the other light beam with which the processing target object is irradiated.

(Note 21)

The optical processing apparatus according to the Note 20, wherein
the optical processing apparatus further includes a calculation unit configured to generate information related to a measured result of the processing target object based on the detection light detected by the measurement unit.

(Note 22)

The optical processing apparatus according to the Note 21, wherein
the optical processing apparatus emits the other light beam based on the information related to the measured result.

(Note 23)

The optical processing apparatus according to the Note 22, wherein
the optical processing apparatus determines, based on the information related to the measured result, at least one of an irradiation position, the number of times of the irradiation, and an irradiation condition of the other light beam relative to the processing target object.

(Note 24)

The optical processing apparatus according to the Note 23, wherein
the irradiation condition is a condition that is at least one of an intensity and a wavelength of the other light beam with which the processing target object is irradiated.

(Note 25)

The optical processing apparatus according to the Note 21, wherein
the information related to the measured result includes information related to a position of a part of the processing target object that is irradiated with the one light beam.

(Note 26)

The optical processing apparatus according to the Note 25, wherein
the optical processing apparatus emits the other light beam based on the information related to the position.

(Note 27)

The optical processing apparatus according to the Note 26, wherein
the optical processing apparatus determines, based on the information related to the position, at least one of an irradiation position, the number of times of the irradiation, and an irradiation condition of the other light beam relative to the processing target object.

(Note 28)

The optical processing apparatus according to the Note 27, wherein
the irradiation condition is a condition that is at least one of an intensity and a wavelength of the other light beam with which the processing target object is irradiated.

(Note 29)

The optical processing apparatus according to any one of the Note 19 to the Note 28, wherein

the one light beam is the second light beam,
the other light beam is the first light beam.

(Note 30)

An optical apparatus including:

a condensing optical system that condenses each of the first light beam and the second light beam from the combining element; and
a correction optical system that is disposed on an optical path of the first light beam at an entrance side of the combining element,
wherein
a distance between a condensed position of the first light beam and a condensed position of the second light beam in a case where the correction optical system is disposed on the optical path is shorter than a distance between a condensed position of the first light beam and a condensed position of the second light beam in a case where the correction optical system is note disposed on the optical path.

(Note 31)

The optical apparatus according to the Note 30, wherein
a distance along an optical axis of the condensing optical system between a condensed position of the first light beam and a condensed position of the second light beam in a case where the correction optical system is disposed on the optical path is shorter than a distance an optical axis of the condensing optical system between a condensed position of the first light beam and a condensed position of the second light beam in a case where the correction optical system is note disposed on the optical path.

(Note 32)

An optical processing apparatus including:

a combining element that combines a first light beam which is supplied along a first optical path and which has a first wavelength and a second light beam which is supplied along a second optical path and which has a second wavelength different from the first wavelength;
a condensing optical system that condenses, on an irradiation target plane, each of the first light beam and the second light beam combined by the combining element;
a holding unit configured to hold a processing target object so that a processing target surface of the processing target object is located at the irradiation target plane;
a measurement unit configured to detect detection light of the second light beam that is reflected or scattered by the processing target surface and that returns to the second optical path through the condensing optical system and the combining element;
a calculation unit configured to calculate, based on information related to an intensity of the detection light detected by the measurement unit, position information of a part of the processing target surface that is irradiated with the second light beam; and
a position information modification unit configured to modify, based on information related to a characteristic of the condensing optical system, the position information calculated by the calculation unit.

(Note 33)

The optical processing apparatus according to the Note 32, wherein
the optical processing apparatus further includes a correction optical system that is disposed on the first optical path and that makes a condensed position of the first light beam near the irradiation target plane be closer to a condensed position of the second light beam.

(Note 34)

The optical processing apparatus according to the Note 32 or the Note 33, wherein
the optical processing apparatus determines, based on the position information of the processing target surface, an irradiation position of the first light beam relative to the processing target surface.
Note that the aspects from the Note 32 to the Note 34 described above may further include the configuration described in any one of the Note 1 to the Note 9 described above.

Description of Reference Codes

| | |
|---|---|
| 1: | optical processing apparatus |
| 2, 2a: | optical apparatus |
| P1: | first optical path |
| P2: | second optical path |
| P3: | third optical path |
| P4: | fourth optical path |
| R1: | first light beam |
| R2: | second light beam |
| 10: | light source |
| 11: | correction optical system |
| 12: | combining element |
| 13: | fixed mirror |
| 14: | swingable mirror |
| 16: | condensing optical system |
| L11, L21: | first lens |
| G20, G21: | second lens group |
| 17: | irradiation target plane |
| 18: | processing target object |
| 18s | processing target surface |
| 19: | sample table |
| 20: | guide |
| 22: | control unit |
| 23: | measurement unit |
| 24: | calculation unit |
| 25: | position information modification unit |

**Claims**

1. An optical processing apparatus comprising:

    a combining element that combines a first optical path of a first light beam having a first wavelength and a second optical path of a second light beam having a second wavelength that is longer than the first wavelength;
    a condensing optical system that has a positive refractive power and that condenses each of the first light beam and the second light beam from the combining element on a processing target object; and
    a correction optical system that has a negative refractive power,
    wherein
    the correction optical system is disposed on the first optical path at an entrance side of the combining element,
    one light beam of the first light beam and the second light beam is a light beam for processing the processing target object,
    other light beam of the first light beam and the second light beam is a light beam for measuring the processing target object.

2. An optical processing apparatus comprising:

    a combining element that combines a first optical path of a first light beam having a first wavelength and a second optical path of a second light beam having a second wavelength that is longer than the first wavelength;
    a condensing optical system that has a positive refractive power and that condenses each of the first light beam and the second light beam from the combining element on a processing target object; and
    a correction optical system that has a positive refractive power,
    wherein
    the correction optical system is disposed on the first optical path at an entrance side of the combining element,
    a back focus of the condensing optical system at the first wavelength is longer than a back focus of the condensing optical system at the second wavelength,
    one light beam of the first light beam and the second light beam is a light beam for processing the processing target object,
    other light beam of the first light beam and the second light beam is a light beam for measuring the processing target object.

3. The optical processing apparatus according to claim 1 or claim 2, wherein
    an absolute value of a difference between a back focus of a combined optical system of the condensing optical system and the correction optical system at the first wavelength and a back focus of the condensing optical system at the second wavelength is smaller than an absolute value of a difference between a back focus of the condensing optical system at the first wavelength and the back focus of the condensing optical system at the second wavelength.

4. An optical processing apparatus comprising:

    a combining element that combines a first optical path of a first light beam having a first wavelength and a second optical path of a second light beam having a second wavelength that is longer than the first wavelength;
    a condensing optical system that has a positive refractive power and that condenses each of the first light beam and the second light beam from the combining element on a processing target object; and
    a correction optical system that has a positive refractive power,
    wherein
    the correction optical system is disposed on the second optical path at an entrance side of the combining element,

one light beam of the first light beam and the second light beam is a light beam for processing the processing target object,

other light beam of the first light beam and the second light beam is a light beam for measuring the processing target object.

5. An optical processing apparatus comprising:

a combining element that combines a first optical path of a first light beam having a first wavelength and a second optical path of a second light beam having a second wavelength that is longer than the first wavelength;

a condensing optical system that has a positive refractive power and that condenses each of the first light beam and the second light beam from the combining element on a processing target object; and

a correction optical system that has a negative refractive power,

wherein

the correction optical system is disposed on the second optical path at an entrance side of the combining element,

a back focus of the condensing optical system at the first wavelength is longer than a back focus of the condensing optical system at the second wavelength,

one light beam of the first light beam and the second light beam is a light beam for processing the processing target object,

other light beam of the first light beam and the second light beam is a light beam for measuring the processing target object.

6. The optical processing apparatus according to claim 4 or claim 5, wherein

an absolute value of a difference between a back focus of a combined optical system of the condensing optical system and the correction optical system at the second wavelength and a back focus of the condensing optical system at the first wavelength is smaller than an absolute value of a difference between a back focus of the condensing optical system at the second wavelength and the back focus of the condensing optical system at the first wavelength.

7. The optical processing apparatus according to any one of claim 1 to claim 6, wherein

in a case where the condensing optical system is regarded as a first condensing optical system and the correction optical system is regarded as a first correction optical system,

the first condensing optical system is arranged to be interchangeable with a second condensing optical system that is different from the first condensing optical system,

the first correction optical system is arranged to be interchangeable with a second correction optical system that is different from the first correction optical system.

8. The optical processing apparatus according to claim 7, wherein

the second correction optical system is used as the correction optical system in a case where second condensing optical system is used as the condensing optical system.

9. The optical processing apparatus according to claim 7 or claim 8, wherein

a back focus of the first condensing optical system is different from that of the second condensing optical system,

a focal length of the first correction optical system is different from that of the second correction optical system.

10. The optical processing apparatus according to any one of claim 7 to claim 9 depending on any one of claim 1 or claim 4, wherein

a focal length of the second correction optical system is longer than a focal length of the first correction optical system in a case where a back focus of the first condensing optical system is shorter than a back focus of the second condensing optical system,

the focal length of the second correction optical system is shorter than the focal length of the first correction optical system in a case where the back focus of the first condensing optical system is longer than the back focus of the second condensing optical system.

11. The optical processing apparatus according to any one of claim 7 to claim 9 depending on claim 2, wherein

a focal length of the second correction optical system at the first wavelength is longer than a focal length of the first correction optical system at the first wavelength in a case where a back focus of the first condensing optical system at the first wavelength is shorter than a back focus of the second condensing optical system at the first wavelength,

the focal length of the second correction optical system at the first wavelength is shorter than the focal length of the first correction optical system at the first wavelength in a case where the back focus of the first condensing optical system at the first wavelength is longer than the back focus of the second condensing optical system at the first wavelength.

12. The optical processing apparatus according to any one of claim 7 to claim 9 depending on claim 5, wherein

a focal length of the second correction optical system at the second wavelength is longer than a focal length of the first correction optical system at the second wavelength in a case where a back focus of the first condensing optical system at the second wavelength is shorter than a back focus of the second condensing optical system at the second wavelength, the focal length of the second correction optical system at the second wavelength is shorter than the focal length of the first correction optical system at the second wavelength in a case where the back focus of the first condensing optical system at the second wavelength is longer than the back focus of the second condensing optical system at the second wavelength.

13. The optical processing apparatus according to any one of claim 1 to claim 3 or claim 7 to claim 11 depending on any one of claim 1 to claim 3, wherein the correction optical system is not disposed on the second optical path.

14. The optical processing apparatus according to any one of claim 4 to claim 6, claim 7 to claim 10 depending on any one of claim 4 to claim 6, or claim 12, wherein the correction optical system is not disposed on the first optical path.

15. The optical processing apparatus according to any one of claim 1 to claim 14, wherein

the condensing optical system includes: a first lens having a negative refractive power; and a second lens group having a positive refractive power as a whole in this order from the combining element side, a focal length fc of the correction optical system at the first wavelength and a focal length fg of the condensing optical system at the first wavelength satisfy such a relationship that $|fc| > 10 \times fg$.

16. The optical processing apparatus according to any one of claim 1 to claim 15, wherein

the condensing optical system includes: a first lens having a negative refractive power; and a second lens group having a positive refractive power as a whole in this order from the combining element side, the second lens group includes:

one or more positive lens that has a positive refractive power and that is made from a first lens material; and one or more negative lens that has a negative refractive power and that is made from a second lens material, an Abbe number v1 of the first lens material and an Abbe number v2 of the second lens material satisfy such a relationship that v1 > v2, wherein an Abbe number v of a lens material is defined as $v = (n2-1) / (n2-n1)$ by using a refractive index n1 of the lens material relative to the first wavelength and a refractive index n2 of the lens material relative to the second wavelength.

17. The optical processing apparatus according to any one of claim 1 to claim 16, wherein the optical processing apparatus comprises a deflection scanning unit that is disposed on the first optical path and the second optical path between the combining element and the condensing optical system and that deflects the first light beam and the second light beam to move, along an axis intersecting with an optical axis of the condensing optical system, condensed positions of the first light beam and the second light beam emitted from the condensing optical system.

18. The optical processing apparatus according to any one of claim 1 to claim 17, wherein an angle between a principal ray of each of the first light beam and the second light beam and a normal line at a condensed position thereof is equal to or smaller than 1 degree.

19. The optical processing apparatus according to any one of claim 1 to claim 18, wherein

the processing target object is irradiated with the other light beam of the first light beam and the second light beam through the combining element and the condensing optical system, the optical processing apparatus further comprises a measurement unit configured to detect, through the condensing optical system and the combining element, detection light caused by the other light beam with which the processing target object is irradiated.

20. The optical processing apparatus according to claim 19, wherein the optical processing apparatus further comprises a calculation unit configured to generate, based on the detection light detected by the measurement unit, position information related to a position of a part of the processing target object that is irradiated with the one light beam of the first light beam and the second light beam.

21. The optical processing apparatus according to claim 20, wherein
the optical processing apparatus emits the one light beam of the first light beam and the second light beam based on the position information.

22. The optical processing apparatus according to any one of claim 1 to claim21, wherein

the one light beam is the second light beam,
the other light beam is the first light beam.

FIG. 1

EP 4 299 233 A1

FIG. 2

| Surface No. | R [mm] | D [mm] | Refractive Index | |
|---|---|---|---|---|
| | | | WL532 [nm] | WL1550 [nm] |
| 11a | −522.079 | 5.000 | 1.460711 | ――― |
| 11b | Plane | 30.000 | 1.000000 | ――― |
| 12a | Plane | 20.000 | 1.460711 | 1.444018 |
| 12b | Plane | 100.000 | 1.000000 | |
| 13 | Plane | −30.000 | −1.000000 (Mirror) | |
| 14 | Plane | 40.000 | −1.000000 (Mirror) | |
| L11a | −35.923 | 3.000 | 1.460711 | 1.444018 |
| L11b | 791.538 | 9.780 | 1.000000 | |
| L12a | −55.757 | 10.000 | 1.460711 | 1.444018 |
| L12b | −50.697 | 0.500 | 1.000000 | |
| L13a | −266.264 | 16.000 | 1.460711 | 1.444018 |
| L13b | −60.325 | 0.500 | 1.000000 | |
| L14a | 200.681 | 15.000 | 1.460711 | 1.444018 |
| L14b | −133.761 | 0.500 | 1.000000 | |
| L15a | 117.882 | 10.000 | 1.460711 | 1.444018 |
| L15b | 327.122 | 144.669 | 1.000000 | |

FIG. 3

P1,R1

11S

L21

L22
L23
L24
L25
L26
L27
L28

G21

16a

2a

14

P4a
P4b
P4c

P4

FP

Fb
Fa
Fc

17

Y

X

XZ

Z

FIG. 4

| Surface No. | R [mm] | D [mm] | Refractive Index | |
|---|---|---|---|---|
| | | | WL532[nm] | WL1550[nm] |
| 11Sa | 2930.827 | 5.000 | 1.460711 | ---- |
| 11Sb | Plane | 30.000 | 1.000000 | ---- |
| 12a | Plane | 20.000 | 1.460711 | 1.444018 |
| 12b | Plane | 100.000 | 1.000000 | |
| 13 | Plane | -30.000 | -1.000000(Mirror) | |
| 14 | Plane | 40.000 | -1.000000(Mirror) | |
| L21a | -33.190 | 2.000 | 1.460711 | 1.444018 |
| L21b | 138.223 | 10.126 | 1.000000 | |
| L22a | -60.361 | 8.000 | 1.435353 | 1.426027 |
| L22b | -42.298 | 0.500 | 1.000000 | |
| L23a | 998.032 | 18.000 | 1.435353 | 1.426027 |
| L23b | -41.850 | 0.500 | 1.000000 | |
| L24a | -45.446 | 3.000 | 1.460711 | 1.444018 |
| L24b | -98.617 | 0.500 | 1.000000 | |
| L25a | 108.428 | 17.000 | 1.435353 | 1.426027 |
| L25b | -108.428 | 0.500 | 1.000000 | |
| L26a | 104.248 | 15.000 | 1.435353 | 1.426027 |
| L26b | -166.083 | 11.044 | 1.000000 | |
| L27a | -85.813 | 3.000 | 1.460711 | 1.444018 |
| L27b | 85.813 | 9.991 | 1.000000 | |
| L28a | 409.756 | 10.000 | 1.435353 | 1.426027 |
| L28b | -133.627 | 100.000 | 1.000000 | |

FIG. 5

FIG. 6

## INTERNATIONAL SEARCH REPORT

| | International application No. |
|---|---|
| | PCT/JP2021/007455 |

**A.  CLASSIFICATION OF SUBJECT MATTER**
Int.Cl. B23K26/064(2014.01)i
FI: B23K26/064Z

According to International Patent Classification (IPC) or to both national classification and IPC

**B.  FIELDS SEARCHED**

Minimum documentation searched (classification system followed by classification symbols)
Int.Cl. B23K26/00-26/70

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X<br>Y<br><br>A | WO 2018/110238 A1 (SUMITEC CO., LTD.) 21 June 2018<br>(2018-06-21), paragraphs [0033], [0053], [0070],<br>fig. 9 | 1-2, 13, 21<br>1-3, 7-11, 13,<br>17-21<br>15-16 |
| Y<br><br>A | JP 2018-501964 A (PRECITEC GMBH & CO. KG) 25<br>January 2018 (2018-01-25), paragraphs [0001],<br>[0027], [0028], [0039], [0043], [0046], [0049],<br>fig. 1-4 | 1-3, 5-14, 17-<br>21<br>15-16 |
| X<br><br>Y<br><br>A | US 2020/0361038 A1 (PANASONIC INTELLECTUAL<br>PROPERTY MANAGEMENT CO., LTD.) 19 November 2020<br>(2020-11-19), paragraphs [0184], [0188], [0198],<br>[0207]-[0213], [0376], [0377], fig. 16, 17 | 4, 14, 17, 19-<br>20<br>5-10, 12, 14,<br>18-21<br>15-16 |

☒  Further documents are listed in the continuation of Box C.        ☒  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 May 2021 | 18 May 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
|---|
| PCT/JP2021/007455 |

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2008/053915 A1 (NABTESCO CORPORATION)  08 May 2008 (2008-05-08), paragraph [0081] | 7-14, 17-21 |

Form PCT/ISA/210 (second sheet) (January 2015)

INTERNATIONAL SEARCH REPORT
Information on patent family members

| | | | |
|---|---|---|---|
| International application No. | | | |
| PCT/JP2021/007455 | | | |

WO 2018/110238 A1    21 June 2018        KR 10-2019-0097033 A
                                         CN 110337708 A
                                         TW 201836748 A

JP 2018-501964 A     25 January 2018       US 2017/0326669 A1
                                           paragraphs [0001], [0026], [0027],
                                           [0044], [0048], [0051], [0054],
                                           fig. 1-4
                                           WO 2016/062636 A1
                                           EP 3140609 B1
                                           CA 2961278 A
                                           CN 107076546 A

US 2020/0361038 A1 19 November 2020       JP 2021-030253 A
                                          paragraphs [0022], [0026], [0036],
                                          [0044]-[0049], [0195], [0196],
                                          fig. 1, 2
                                          JP 2020-185601 A
                                          DE 102020206089 A1
                                          CN 111940910 A

WO 2008/053915 A1   08 May 2008           TW 200827078 A

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4994639 B
- JP 5231883 B
- JP 2020101499 A
- JP 2020085633 A
- JP 2010025922 A
- JP 2016510415 A
- US 2014226145 A1